# EUROPÄISCHE PATENTSCHRIFT

(11) **EP 3 869 095 B1**
(45) Veröffentlichungstag und Bekanntmachung des Hinweises auf die Patenterteilung: **17.12.2025**
(21) Anmeldenummer: 21158105.3
(22) Anmeldetag: 19.02.2021
(51) Int. Cl.: F21V 21/12, F21S 8/08, F21S 2/00, F16B 7/04

(54) **MODULARE LEUCHTENSTELE**
MODULAR LUMINAIRE
POINT LUMINEUX MODULAIRE

(30) Priorität: 19.02.2020 DE 102020104420
(43) Veröffentlichungstag der Anmeldung: 25.08.2021
(73) Patentinhaber: TRILUX GmbH & Co. KG, 59759 Arnsberg (DE)
(72) Erfinder: Drees, Frank, 58840 Plettenberg (DE); Keßler, Björn, 59889 Eslohe (DE); Knoche, Ulrich, 59821 Arnsberg (DE)
(74) Vertreter: Lippert Stachow Patentanwälte Rechtsanwälte

(56) Entgegenhaltungen:
- EP-A2- 1 235 028
- DE-A1- 102018 002 190
- KR-B1- 100 931 572
- US-B2- 9 976 734

## Beschreibung

Die Erfindung betrifft eine modulare Leuchtenstele gemäß dem Oberbegriff von Anspruch 1 sowie ein Set zur Realisierung einer solchen modularen Leuchtenstele sowie ein Verfahren zur Realisierung einer Leuchtenstele.

Gattungsgemäße Leuchtenstelen sind weithin bekannt und werden häufig im öffentlichen Raum zur Beleuchtung eingesetzt, beispielsweise zur Straßenbeleuchtung oder der Beleuchtung von Parks und Plätzen. Solche Leuchten weisen häufig eine erhebliche vertikale Erstreckung auf, insbesondere eine Erstreckung von über 5 **m.** Üblicherweise sind solchen Leuchtenstelen modular aufgebaut, so dass je nach Einsatzgebiet der Leuchtenstele die gewünschte Leuchtenstele aus einer gezielten Auswahl an Modulen realisiert wird. Üblicherweise weist eine Leuchtenstele ein Sockelmodul auf, das mit dem Boden verbunden wird, auf dem die Leuchtenstele aufgestellt werden soll, sowie ein Mastmodul, das anschließend auf das Sockelmodul aufgesetzt und an diesem fixiert wird, sowie zumindest ein weiteres Modul, das über, **d. h.** vertikal über dem Mastmodul angeordnet wird. Beispielsweise ist bekannt, als Module Leuchtmodule vorzusehen, die eine Lichtaustrittsöffnung aufweisen und in deren Modulgehäuse eine Lichtquelle angeordnet ist, die dazu ausgebildet ist, durch die Lichtaustrittsöffnung Licht abzustrahlen. Je nach Anwendungsgebiet kann die Leuchtenstele auch mehrere aufeinander aufgesetzte und miteinander befestigte Leuchtmodule aufweisen, wobei besonders bevorzugt jedes dieser Leuchtmodule einen bestimmten Leuchtzweck erfüllt. So kann beispielsweise ein Leuchtmodul mit einer horizontal umlaufenden Lichtöffnung ausgebildet sein, um eine Allgemeinbeleuchtung zu gewährleisten, und ein weiteres Leuchtmodul kann mit einer Lichtaustrittsöffnung versehen sein, die lediglich über einen Abschnitt des Umfangs des Modulgehäuses ausgebildet ist, wobei dieses Leuchtmodul als Strahlermodul wirkt und zum Anstrahlen von Objekten vorteilhaft sein kann. Ferner ist bekannt, als Module andere Funktionsmodule vorzusehen, beispielsweise Kameramodule, in denen eine Kamera integriert ist, Funkmodule, über die ein Funknetzwerk aufgebaut werden kann, Lademodule, über die eine Ladestation bereitgestellt werden kann, etc.

Dabei sind gattungsgemäße Leuchtenstelen zumindest abschnittsweise nach Art eines Rohres ausgebildet. Hierzu weisen die Leuchtenstelen üblicherweise Module auf, die jeweils ein Modulgehäuse aufweisen, das nach Art eines sich mit einer Rohrachse entlang einer Vertikalen erstreckenden Rohres ausgebildet ist, dessen Rohrwandung einen Innenraum des jeweiligen Moduls horizontal umschließt. In dem Innenraum sind dann die für den Zweck des jeweiligen Moduls vorgesehenen elektrischen Funktionselemente, wie beispielsweise elektrische Leitungen, Lichtquellen, Funkmodule, Kameras, Ladeeinrichtungen, etc., angeordnet. Bei den gattungsgemäßen Leuchtenstelen besteht grundsätzlich eine erhebliche Herausforderung darin, die verschiedenen rohrartig ausgestalteten Module vertikal übereinander anzuordnen und dergestalt fest aneinander zu fixieren, dass die Leuchtenstele, die sich üblicherweise über eine erhebliche Länge erstreckt, üblichen Witterungsbedingungen ohne Gefahr einer Beschädigung standhalten kann, insbesondere auch bei vereinzelt auftretenden, erheblichen Windstärken. Im Stand der Technik sind bereits verschiedene Ansätze bekannt, um solche Module mit rohrförmigen Modulgehäusen miteinander zu verbinden, wenn sie entlang der Vertikalen übereinander angeordnet sind. So besteht ein Ansatz darin, an jedem vertikalen Ende eines jeden Moduls eine Abschlussplatte vorzusehen, die mit dem rohrförmigen Modulgehäuse durch Verschweißen oder Umformen verbunden ist, und in der Durchgangsbohrungen vorgesehen sind. Bei dieser Befestigungsvariante werden zwei Module mit ihren Abschlussplatten aufeinander gestellt, wonach Schrauben durch die Durchgangsbohrungen hindurchgeführt werden und die Module miteinander verschraubt werden. Grundsätzlich ist hierüber eine sehr robuste Befestigung von übereinander angeordneten Modulen möglich. Allerdings ist eine solche Befestigung mühsam durchzuführen, und bei der Ausrichtung der Module muss darauf geachtet werden, dass die Durchgangsbohrungen in ihren Abschlussplatten exakt fluchtend übereinander angeordnet werden, was wegen schlechter Sicht auf die Durchgangsbohrungen schwierig ist. Zur Vereinfachung der Montage und zum Ermöglichen einer variablen Ausrichtung von übereinander angeordneten Modulen bezogen auf eine Rotation um die Vertikale sind im Stand der Technik auch alternative Befestigungstechniken bekannt. So ist beispielsweise bekannt, an den vertikalen Enden der Module jeweils integrierte Keilflansche vorzusehen, wobei zur Befestigung von zwei Modulen miteinander eine Klemmschelle außen um die Keilflansche geschraubt wird. Hierdurch ist zwar eine einfachere Montage und eine flexiblere Ausrichtung von zwei übereinander angeordneten Modulen ermöglicht, jedoch bestehen bei dieser Befestigungstechnik begrenzte Optionen für das Design des Übergangs zwischen den Modulen, und diese Befestigungstechnik hat sich teilweise als nicht hinreichend robust erwiesen, insbesondere für Leuchtenstelen mit besonders großen vertikalen Erstreckungen von über 4 m oder gar über 5 m. In US 9,976,734 B2 ist eine gattungsgemäße Leuchtenstele offenbart, die mehrere Modulgehäuse aufweist, die übereinander angeordnet sind und an ihren zueinander weisenden vertikalen Seiten jeweils einen Flansch mit einer keilförmigen Außenseite aufweisen, wobei zur Realisierung der Leuchtenstele die beiden Flansche aufeinander aufgelegt werden und die beiden Flansche mittels einer mit den keilförmigen Außenseiten zusammenwirkenden Klemmvorrichtung gegeneinander verpresst werden.

Der vorliegenden Erfindung liegt die Aufgabe zugrunde, eine Leuchtenstele, ein Set zur Realisierung einer Leuchtenstele und ein Verfahren zur Realisierung einer Leuchtenstele bereitzustellen, mit der bzw. denen zumindest ein Nachteil bestehender Leuchten, Sets und Verfahren zumindest teilweise behoben werden kann.

Als eine Lösung schlägt die Erfindung eine Leuchtenstele mit den Merkmalen von Anspruch 1 vor. Die erfindungsgemäß Leuchtenstele ist als modulare Leuchtenstele aufgebaut, die mindestens zwei Module umfasst, die jeweils ein Modulgehäuse aufweisen, das nach Art eines sich mit seiner Rohrachse entlang einer Vertikalen erstreckenden Rohres ausgebildet ist, dessen Rohrwandung einen Innenraum des jeweiligen Moduls horizontal umschließt. Das Modulgehäuse begrenzt somit den Innenraum in der Horizontalen, d. h. auf den senkrecht zur Vertikalen stehenden Richtungen. Dabei kann das Rohr in seiner Rohrwandung Unterbrechungen aufweisen. Besonders bevorzugt umschließt die Rohrwandung den Innenraum um die Rohrachse des jeweiligen Moduls jedoch umfänglich geschlossen, insbesondere über die vertikale Erstreckung der Rohrwandung hinweg. Hierdurch kann eine Abdichtung des Innenraums gegenüber der Umgebung gewährleistet sein. Allgemein ist besondere bevorzugt zumindest ein Teil der Rohrwandung aus einem Metall, insbesondere Stahl hergestellt, insbesondere als Gussteil. Besonders bevorzugt ist zumindest ein vertikales Ende der Rohrwandung eines Moduls, an dem es an einem anderen Modul befestigt ist, bevorzugt sind zumindest das vertikal obere und das vertikal untere Ende der Rohrwandung, umfänglich geschlossen aus einem Metall hergestellt. Dies verbessert eine möglichst robuste Anbindung des Moduls an seinen vertikalen Enden an benachbarte Module. Besonders bevorzugt ist die Rohrwandung durch eine Metallrohrwandung ausgebildet, die Unterbrechungen aufweist, die durch Rohrwandungsabschnitte, die nicht aus Metall bestehen sondern beispielsweise aus Kunststoff oder Glas, verschlossen sind. Allgemein weisen bevorzugt die Module jeweils eine vertikale Erstreckungslänge von mindestens 50 cm, insbesondere zwischen 50 cm und 4 m auf. Allgemein bevorzugt weisen die Module einen Außendurchmesser von mindestens 15 cm, insbesondere mindestens 20 cm auf. Allgemein bevorzugt weisen die Modulgehäuse einen über mindestens 70 %, insbesondere mindestens 90 % ihrer vertikalen Erstreckung hinweg konstanten Außendurchmesser auf. Allgemein bevorzugt weisen die Module an ihrem vertikal oberen und in ihrem vertikal unteren Ende jeweils denselben Außendurchmesser auf, so dass zwei Module ohne einen optischen Bruch vertikal übereinander angeordnet und miteinander verbunden werden können. Besonders bevorzugt sind die Module nach Art eines Zylinders, insbesondere nach Art eines Zylinders mit kreisrundem Querschnitt, ausgebildet. Bei der erfindungsgemäßen modularen Leuchtenstele ist in dem Innenraum eines jeden der Module jeweils zumindest ein elektrisches Funktionselement angeordnet. Das jeweilige elektrische Funktionselement dient dazu, dass das jeweilige Modul seinen bestimmungsgemäß vorgesehenen Zweck erfüllen kann. Beispielsweise können als elektrische Funktionselemente elektrische Kabel, Kameras, Funkmodule, Bewegungssensoren und/oder Lichtquellen vorgesehen sein.

Bei der erfindungsgemäßen modularen Leuchtenstele sind die genannten zumindest zwei Module entlang der Vertikalen übereinander angeordnet und aneinander befestigt. Hierzu weist die Leuchtenstele ein spulenförmiges Verbindungselement auf, das einen oberen Flansch, einen unteren Flansch und einen Verbindungsabschnitt aufweist. Der obere Flansch ist von dem unteren Flansch vertikal beabstandet, und der Verbindungsabschnitt verläuft entlang der Vertikalen zwischen den Flanschen und verbindet die Flansche miteinander. Die Flansche sind vorzugsweise umfänglich um die Vertikale und somit die Rohrachse des jeweiligen Moduls, an dessen Rohrwandung der jeweilige Flansch befestigt ist, geschlossen umlaufend ausgebildet. Zumindest einer der Flansche kann jedoch auch Unterbrechungen aufweisen, so dass dieser Flansch Winkelabschnittserstreckungen um die Rohrachse aufweist, die voneinander jeweils um einen Winkelabschnitt um die Rohrachse beabstandet sind. Das Vorsehen eines durchgehenden Flanschs kann für die Stabilität besonders vorteilhaft sein. Das Vorsehen von Unterbrechungen in einem Flansch kann für die Zugänglichkeit der Flansche besonders vorteilhaft sein und eine einfache und flexible Montage der Leuchtenstele besonders begünstigen. In jedem Fall erstrecken sich beide Flansche jeweils mit einem horizontalen Flanschabschnitt, der wie erläutert horizontale Unterbrechungen aufweisen kann, horizontal über den Verbindungsabschnitt hinaus. Die Flanschabschnitte der beiden Flansche sind somit jeweils ausgehend von einem vertikalen Bereich, der sich vertikal innerhalb der Erstreckung des Verbindungsabschnitts und somit zwischen den Flanschen befindet und horizontal innerhalb der horizontalen Erstreckung der Flanschabschnitte befindet, zugänglich. In einer Betriebsposition der Leuchtenstele, in der die Leuchtenstele bestimmungsgemäß aufgebaut ist, ist der obere Flansch an einer zum Innenraum gewandten Seite der Rohrwandung des oberen Moduls angeordnet und an der Rohrwandung des oberen Moduls fixiert, und der untere Flansch ist an einer zum Innenraum gewandten Seite der Rohrwandung des unteren Moduls angeordnet und an dieser Rohrwandung fixiert, wobei die Modulgehäuse der beiden Module vertikal voneinander beabstandet sind und sich der Verbindungsabschnitt zwischen den Modulgehäusen der beiden Module erstreckt. Die Flansche erstrecken sich somit jeweils an einer solchen horizontalen Seite der Rohrwandung des jeweiligen Moduls, mit der die Rohrwandung zum Innenraum weist. Die Flansche sind bevorzugt innerhalb der horizontalen Erstreckung des von der Rohrwandung definierten Innenraums angeordnet und erstrecken sich insbesondere ausschließlich horizontal innerhalb der horizontalen Erstreckung des jeweiligen Modulgehäuses. In einer Ausführungsform ist einer der beiden Flansche des Verbindungselements einstückig mit einem der beiden Module verbunden, beispielsweise durch Verschweißen. In einer Ausführungsform ist das Verbindungselement insgesamt einstückig mit einem der Module ausgebildet, wobei der Verbindungsabschnitt und einer der beiden Flansche vertikal über das Modulgehäuse vorstehen. Dabei ist zu berücksichtigen, dass das Modulgehäuse nach Art eines Rohrabschnitts ausgebildet ist, wobei das vertikale Ende des Rohrabschnitts das vertikale Ende des Modulgehäuses ausbildet. In einer Ausführungsform ist das Verbindungselement als ein von beiden Modulen separates Bauteil ausgebildet, wobei in der Leuchtenstele jeweils einer der beiden Flansche mit jeweils einem, dem jeweiligen Flansch zugeordneten der Module positionsfest verbunden und somit daran fixiert ist. Allgemein sind der obere und der untere Flansch dazu ausgebildet, den Verbindungsabschnitt mit den Rohrwandungen des oberen und des unteren Moduls zu verbinden. Der Verbindungsabschnitt weist einen geringeren Querschnitt senkrecht zur Vertikalen auf als die Rohrwandung auf Höhe der Flansche. Dadurch ist der Verbindungsabschnitt horizontal zurückgesetzt von den Rohrwandungen, so dass zumindest einer, bevorzugt beide Flansche von einem zwischen den Modulgehäusen ausgebildeten Zwischenraum aus zugänglich sind, während sich die modulare Leuchtenstele in einer Betriebsposition befindet, in der die Module aneinander positionsfest fixiert sind, wobei die Module aneinander mittels des Verbindungselements, insbesondere ausschließlich über das Verbindungselement fixiert sind.

Die erfindungsgemäße Leuchtenstele weist im Verglich zu herkömmlichen Leuchtenstelen wesentliche Vorteile auf. Durch das Vorsehen eines Verbindungselements mit oberem und unterem Flansch kann eine sehr robuste Fixierung der Module zueinander bei der Realisierung der Leuchtenstele ermöglicht sein, insbesondere über herkömmliche Mittel, wie beispielsweise Schraubverbindungen. Die Erfinder haben erkannt, dass das Vorsehen eines Verbindungselements mit einem Verbindungsabschnitt, der sich vertikal zwischen zwei Flanschen erstreckt, von besonderem Vorteil ist, da der Verbindungsabschnitt es ermöglicht, dass zur Fixierung der Module zueinander die Flansche leicht zugänglich sind. Dabei stehen sowohl der obere als auch der untere Flansch horizontal über den Verbindungsabschnitt vor, damit zumindest einer der Flansche einfach zugänglich ist. Darüber hinaus ermöglicht das Vorsehen des Verbindungselements mit den Flanschen eine einfache Anordnung der Module aufeinander, bevor die Module aneinander fixiert werden, was den Aufbau der modularen Leuchtenstele zum Erreichen der Betriebsposition weiter vereinfacht. Darüber hinaus kann durch der Verbindungselement eine variable Ausrichtung der Module zueinander bezogen auf eine Rotation um die Vertikale ermöglicht sein, da bevorzugt ein Flansch in verschiedenen Rotationspositionen um die Vertikale relativ zu einem der Module ausgerichtet werden kann, während der andere Flansch an der Rohrwandung des anderen Moduls bereits positionsfest fixiert ist, bevor der eine Flansch an der Rohrwandung des einen Moduls ebenfalls positionsfest fixiert wird.

In einer Ausführungsform weist der Verbindungsabschnitt einen lichten Querschnitt auf, der mindestens ein Zehntel, insbesondere mindestens ein Fünftel, insbesondere mindestens ein Drittel der Querschnitte der beiden Module an ihren zueinander gewandten Enden aufweist, wobei auf die Außenquerschnitte der beiden Module abgestellt wird. Das Vorsehen eines Verbindungsabschnitts mit einem lichten Querschnitt bringt den besonderen Vorteil mit sich, dass auf einfache Weise durch den lichten Querschnitt des Verbindungsabschnitts eine Durchführpassage zwischen den beiden Modulen gewährleistet ist, beispielsweise zur Durchführung von elektrischen Leitungen von einem Modul zum nächsten Modul. An dieser Stelle sei angemerkt, dass bereits die Ausgestaltung der Modulgehäuse nach Art eines Rohres den besonderen Vorteil mit sich bringt, dass die Modulgehäuse einfach aufgebaut sind und einen hinreichenden Innenraum umschließen, in denen die elektrischen Funktionselemente angeordnet werden können. Besonders bevorzugt ist auch der Verbindungsabschnitt nach Art eines Rohres ausgebildet. Dabei sind der obere und der untere Flansch jeweils an der Außenseite des den Verbindungsabschnitt bildenden Rohres angeordnet und erstrecken sich von dieser Außenseite des den Verbindungsabschnitt ausbildenden Rohres horizontal zur jeweiligen Rohrwandung des jeweiligen Moduls hin. Allgemein bildet bevorzugt der Verbindungsabschnitt einen lichten Querschnitt aus, der in sämtlichen horizontalen Richtungen von den Rohrwandungen der beiden Module beabstandet ist, bevorzugt um mindestens ein Zehntel, insbesondere mindestens ein Fünftel des Durchmessers der jeweiligen Rohrwandung in der jeweiligen horizontalen Richtung. Dies kann besonders vorteilhaft sein für eine robuste Fixierung mittels der Flansche des Verbindungselements und insbesondere auch für die Durchführung von elektrischen Leitungen zwischen den Modulen.

Erfindungsgemäß weist eines der Module einen Modulflansch an der zum Innenraum gewandten Seite seiner Rohrwandung auf. Der Modulflansch kann beispielsweise an die zum Innenraum gewandte Seite der Rohrwandung angeschweißt sein oder integral mit der Rohrwandung verbunden sein, sich jedoch ausgehend von der Rohrwandung zur horizontalen Mitte des Moduls hin erstrecken. Beispielsweise kann der Modulflansch vorgesehen sein, indem ein die Rohrwandung bildendes Blech umgeformt ist unter Ausbildung des Modulflanschs oder indem das Modulgehäuse umfassend Rohrwandung und Modulflansch durch Metallgussverfahren einstückig hergestellt ist. Erfindungsgemäß liegt einer der Flansche des Verbindungselements in der Betriebsposition an dem Modulflansch an und ist über Befestigungsmittel an dem Modulflansch positionsfest fixiert. Beispielsweise können als Befestigungsmittel Schrauben vorgesehen sein, wobei in dem genannten Flansch des Verbindungselements und dem Modulflansch jeweils Durchführungen vorgesehen sind, durch die sich die Schrauben hindurch erstrecken. Beispielsweise können als Befestigungsmittel zwischen Flansch und Modulflansch wirkende Klemmelemente, beispielsweise Klemmzangenelemente, vorgesehen sein. Das Vorsehen eines Modulflanschs an einem der Module kann den besonderen Vorteil mit sich bringen, dass zunächst die beiden Module aufeinander angeordnet werden können, indem das Verbindungselement, das zuvor an dem anderen Modul befestigt worden ist, mit einem seiner Flansche auf den Modulflansch aufgesetzt wird, wonach dann eine zuverlässige Fixierung zwischen Flansch und Modulflansch erfolgen kann. Erfindungsgemäß ist der Modulflansch und/oder der Flansch des Verbindungselements als Langlochflansch ausgebildet, der Langlöcher aufweist, die sich über einen Winkelbereich um die Vertikale erstrecken und über einen Winkelabstand voneinander beabstandet sind. Bevorzugt weist der als Langlochflansch ausgebildete Flansch die Langlöcher in seinem Flanschabschnitt auf. Das Vorsehen von Langlöchern bringt den besonderen Vorteil mit sich, dass die Module in verschiedenen Winkelpositionen um die Vertikale zueinander ausgerichtet werden können und miteinander fixiert werden können. Bevorzugt sind die Langlöcher nach Art eines Ringabschnitts ausgebildet, insbesondere Kreisringabschnitts, wobei der jeweilige Ringabschnitt ein Abschnitt eines imaginären Rings ist, der für sämtliche Langlöcher denselben Mittelpunkt und denselben Radius aufweist. Besonders bevorzugt erstrecken sich die Langlöcher jeweils über einen Winkelbereich von mindestens 10°, insbesondere mindestens 20°. Besonders bevorzugt die Langlöcher jeweils um einen Winkelabstand von mindestens 20° voneinander beabstandet. Die Kombination der entsprechenden Winkelbereiche und Winkelabstände ist zum einen für die variable Ausrichtbarkeit, zum anderen für die Stabilität der Leuchtenstele besonders vorteilhaft. Besonders bevorzugt weist das andere Modul ebenfalls einen Modulflansch auf, der entsprechenden an der zum Innenraum gewandten Seite seiner Rohrwandung angeordnet ist. Bei dieser besonders vorteilhaften Ausführungsform liegen in der Betriebsposition beide Flansche des Verbindungselements jeweils an dem zugeordneten Modulflansch des zugeordneten Moduls an und sind über Befestigungsmittel an diesem zugeordneten Modulflansch fixiert. In einer Ausführungsform weist nur eines der Module einen Modulflansch auf, wobei der andere Flansch des Verbindungselements über andere Mittel als ein Modulflansch an dem anderen Modul befestigt ist, beispielsweise durch Verschweißen des anderen Flanschs an der Rohrwandung des anderen Moduls oder durch Herstellung des Flanschs einstückig mit der Rohrwandung oder durch Vorsehen geeigneter Klemmvorrichtungen zwischen der Rohrwandung des anderen Moduls und dem anderen Flansch oder dem Verbindungsabschnitt.

Besonders bevorzugt sind in der Betriebsposition der Leuchtenstele an dem Modulflansch mehrere, insbesondere zumindest drei, Befestigungsmittel fixiert, die sich durch jeweils eines der Langlöcher des Langlochflanschs hindurch erstrecken und den Modulflansch und den Langlochflansch gegeneinander pressen. Dabei üben sie bevorzugt eine Presskraft entlang der Vertikalen zwischen Modulflansch und Langlochflansch aus. Ebenso ist möglich, dass in der Betriebsposition der Leuchtenstele an dem einen Flansch mehrere, insbesondere zumindest drei, Befestigungsmittel fixiert sind, die sich durch jeweils eines der Langlöcher des als Langlochflansch ausgebildeten Modulflanschs hindurch erstrecken und den Modulflansch und den Flansch gegeneinander pressen. Durch das Vorsehen mehrerer Befestigungsmittel, die an einer determinierten Position an dem Modulflansch (alternativ Flansch) fixiert sind und sich jeweils durch eines der Langlöcher des Langlochflanschs hindurch erstrecken, kann zum einen eine besonders robuste Fixierung der Befestigungsmittel am Modulflansch (alternativ Flansch) gewährleistet sein und zum anderen eine variable Ausrichtbarkeit den Modulen zueinander vor ihrer Befestigung aneinander gewährleistet sein. Besonders bevorzugt sind die Befestigungsmittel als Schrauben vorgesehen, die in der Betriebsposition in einem am Modulflansch (alternativ Flansch) vorgesehenen Gewinde fixiert sind, wobei der Schraubkopf entlang der Vertikalen an der dem Modulflansch (alternativ Flansch) gegenüberliegenden Seite des Flanschs (alternativ Modulflansch) gegen den Flansch (alternativ Modulflansch) presst. Beispielsweise sind die Befestigungsmittel als Gewindebolzen ausgebildet, die an dem Modulflansch (alternativ Flansch) fixiert sind, wobei in der Betriebsposition eine Mutter auf die Gewindebolzen geschraubt ist, die an der dem Modulflansch (alternativ Flansch) abgewandten vertikalen Seite auf den Flansch (alternativ Modulflansch) pressen. Allgemein sind besonders bevorzugt in dem Modulflansch (alternativ Flansch) Befestigungsanker für Befestigungsmittel vorgesehen, in denen in der Betriebsposition die Befestigungsmittel verankert sind. Besonders bevorzugt sind die Befestigungsanker als Gewindelöcher ausgebildet und die Befestigungsmittel als Befestigungsschrauben. Die Befestigungsmittel sind in der Betriebsposition dergestalt in den Befestigungsankern verankert, dass sie den Flansch gegen den Modulflansch pressen. Besonders bevorzugt sind mehr, insbesondere doppelt so viele, Befestigungsanker als Langlöcher vorgesehen, insbesondere Befestigungsanker in dem Modulflansch vorgesehen als Langlöcher in dem als Langlochflansch ausgebildeten Flansch. Dies kann den besonderen Vorteil mit sich bringen, dass Flansch und Modulflansch hinreichend robust ausgestaltet sind und bei der Anordnung eines Befestigungsmittels in jeweils einem Langloch eine Verdrehbarkeit der Module um die Vertikale innerhalb des Winkelbereichs des jeweiligen Langlochs ermöglicht ist, wobei die Variabilität der Anordnung der Module zueinander bezogen auf eine Rotation um die Vertikale dadurch erhöht ist, dass zum Erreichen von möglichst verschiedenen Rotationspositionen der Module um die Vertikale zueinander die Befestigungsmittel in unterschiedlichen Langlöchern angeordnet werden können, und dann innerhalb des Bewegungsbereichs der Befestigungsmittel in den Langlöchern noch eine Verdrehung der Module zueinander erfolgen kann.

In einer Ausführungsform ist der andere der Flansche des Verbindungselements an dem Modulgehäuse des anderen Moduls angeschweißt oder mittels anderer Befestigungsmittel an einem Modulflansch des anderen Moduls positionsfest fixiert. Die anderen Befestigungsmittel können genauso wie die erläuterten Befestigungsmittel ausgebildet sein, jedoch handelt es sich bei den anderen Befestigungsmitteln um eine andere Gruppe an Befestigungsmitteln als bei den Befestigungsmitteln, so dass jeweils separat zum einen Befestigungsmittel und zum anderen andere Befestigungsmittel vorzusehen sind. Besonders bevorzugt sind bei der Leuchtenstele die Befestigungsmittel horizontal versetzt zu den anderen Befestigungsmitteln angeordnet. Hierdurch können die Befestigungsmittel und die anderen Befestigungsmittel besonders gut zugänglich sein.

In einer Ausführungsform weist die Leuchtenstele eine Backenfixiereinrichtung auf, die mehrere Backenelemente aufweist, die um die Vertikale umlaufend verteilt angeordnet sind. Insbesondere sind sie um die Rohrachse von zumindest einem der Module umlaufend verteilt angeordnet. Allgemein sind besonders bevorzugt die Rohrachsen der beiden Module zueinander fluchtend ausgerichtet. Besonders bevorzugt sind die Backenelemente miteinander dergestalt beweglich verbunden, dass sie auf Kreisbahnen mit unterschiedlichen Radien um die Vertikale verteilt anordenbar sind. Die Verbindung der Backenelement ermöglicht somit eine Veränderung der relativen Position der Backenelemente zueinander dergestalt, dass sie auf unterschiedlichen Kreisbahnen mit jeweils unterschiedlichen Radien angeordnet werden können. Die Verbindung kann beispielsweise eine elastische oder gelenkige Verbindung sein. Die Backenelemente weisen bevorzugt jeweils eine horizontale Durchführung zum Durchführen eines sich mit seiner Fixiermittelachse horizontal erstreckenden Fixiermittels auf, wobei in der Betriebsposition der Leuchtenstele die Backeneinrichtung und einer der Flansche des Verbindungselements in dem Innenraum von einem der Module angeordnet sind und jeweils ein Fixiermittel mit einem ersten Ende, bezogen auf seine Fixiermittelachse, gegen den Verbindungsabschnitt presst und entlang seiner Erstreckung entlang seiner Fixiermittelachse von seinem ersten Ende beabstandet in der Durchführung von einem der Backenelemente gehalten ist, insbesondere mit einem Formschluss gehalten ist, unter Ausbildung einer Presskraft zwischen dem Verbindungsabschnitt und dem jeweiligen Backenelement. Besonders bevorzugt presst das jeweilige Backenelement mit seiner von dem Verbindungsabschnitt entlang der Fixiermittelachse des Fixiermittels wegweisenden Seite von innen gegen das Modulgehäuse des genannten Moduls, in dem der genannte eine der Flansche des Verbindungselements und die Backeneinrichtung angeordnet sind, so dass dieses Modulgehäuse in der Betriebsposition mittels der Backenfixiereinrichtung gegen den Verbindungsabschnitt gepresst und an diesem gehalten ist. Die Backenfixiereinrichtung kann somit eine zuverlässig und einfach sowie insbesondere reversibel zu erreichende Fixierung des Verbindungselements gegenüber der Rohrwandung von einem der Module ermöglichen. Bevorzugt pressen die Backenelemente der Backenfixiereinrichtung in der Betriebsposition gegen die zum Innenraum gewandten Seite der Rohrwandung des genannten Moduls. Besonders bevorzugt sind in der Rohrwandung entlang der jeweiligen Fixiermittelachse des jeweiligen Fixiermittels dem jeweiligen Fixiermittel zugeordnete Durchführungen vorgesehen, durch die die Fixiermittel in der Betriebsposition von außen zugänglich sind. Besonders bevorzugt sind die Fixiermittel als Schraube ausgebildet, wobei jedes der Backenelemente ein seinem zugeordneten Fixiermittel zugeordnetes, mit dessen Gewinde korrespondierendes Gewinde aufweist. Besonders bevorzugt weist die Backenfixiereinrichtung mindestens drei, insbesondere mindestens vier Backenelemente auf. Besonders bevorzugt sind die Backenelemente gleichmäßig verteilt um die Vertikale angeordnet, wobei selbstverständlich auf die Betriebsposition abgestellt wird, in der die Module aneinander positionsfest fixiert sind und die Fixiermittel gegen den Verbindungsabschnitt und die Backenelemente gegen das Modulgehäuse des genannten Moduls pressen. Besonders bevorzugt ist jedem der Backenelemente jeweils ein Fixiermittel zugeordnet.

Bei einer weiteren erfindungsgemäßen Lösung, die in Anspruch 7 beansprucht und somit definiert ist, ist an dem anderen Modul anstelle des spulenförmigen Verbindungselements eine Hakeneinrichtung vorgesehen. Die Hakeneinrichtung ist somit in der Betriebsposition an dem anderen Modul, insbesondere dessen Modulgehäuse, insbesondere dessen Rohrwandung, fixiert. Die Hakeneinrichtung liegt in der Betriebsposition mit einem Auflageabschnitt auf einer vertikalen Seite des Modulflanschs auf und hintergreift den Modulflansch mit einem Hakenabschnitt unter Ausübung einer vertikalen Presskraft, mit der der Hakenabschnitt auf die gegenüberliegende vertikale Seite des Modulflanschs presst, so dass der Auflageabschnitt mit einer entsprechenden vertikalen Presskraft gegen die genannte vertikale Seite des Modulflanschs, auf der er aufliegt, gepresst wird. Die Hakeneinrichtung kann eine besonders einfache Befestigung der beiden Module zueinander ermöglichen. In besonders vorteilhaften Ausführungsformen umfasst die Leuchtenstele mehrere Module, die entlang der Vertikalen übereinander angeordnet sind, wobei ein erstes und ein zweites Modul mittels eines spulenförmigen Verbindungselements wie erläutert aneinander fixiert sind und das zweite mit einem dritten Modul mittels einer Hakeneinrichtung wie erläutert fixiert sind, wobei insbesondere das zweite Modul vertikal oberhalb des ersten Moduls angeordnet ist und das dritte Modul vertikal oberhalb des zweiten Moduls angeordnet ist. Besonders bevorzugt ist bei der Leuchtenstele ausschließlich das oberste Modul über eine Hakeneinrichtung mit dem darunter angeordneten Modul wie erläutert verbunden. Die Hakeneinrichtung kann auf verschiedene Weise mit dem Modulgehäuse des anderen Moduls verbunden sein, beispielsweise durch Verschweißen, Verschrauben oder durch einen geeigneten Formschluss. Besonders bevorzugt weist die Hakeneinrichtung Führungsabschnitte auf, die an dem Modulgehäuse des anderen der Module fixiert, insbesondere angeschweißt sind und in denen Hakenelemente um eine horizontale Rotationsachse verschwenkbar geführt sind. In den Führungsabschnitten sind bevorzugt Schrauben vorgesehen, deren Gewinde sich um eine horizontale Schraubenachse herum windet, wobei jede der Schrauben mit einem ihrer Schraubenenden vertikal zur Rotationsachse versetzt an einem der Hakenelemente anliegt, wobei das Schraubenende mit dem jeweiligen Hakenelement gekoppelt ist und eine Veränderung der Position des Schraubenendes entlang der Schraubenachse ausgehend von der Betriebsposition eine Rotation des Hakenelements um die Rotationsachse bewirkt. Bevorzugt verläuft die Schraubenachse mit einem Winkel von mehr als 30°, insbesondere mehr als 60°, insbesondere 90° zur Rotationsachse Das jeweilige Schraubenelement kann mit dem jeweiligen Hakenelement beispielsweise dadurch gekoppelt sein, dass in der Betriebsposition das Schraubenende an dem Hakenelement anliegt. Indem die Schrauben mit ihren Schraubenenden vertikal zur Rotationsachse versetzt an den Hakenelementen anliegen, bewirkt eine Veränderung der Position des jeweiligen Schraubenendes entlang der Schraubenachse eine Rotation des Hakenelements um die Rotationsachse. Hierdurch kann ein Hakenelement auf besonders einfache Weise mittels der zugeordneten Schraube so an die gegenüberliegende vertikale Seite des Modulflanschs geführt werden, dass es gezielt gegen den Modulflansch presst. Besonders bevorzugt bilden die Führungsabschnitte eine Führungsnut aus, in die sich die Hakenelemente jeweils mit einem Hakenelementabschnitt erstrecken, der plattenförmig ausgebildet ist, wobei die Rotationsachse in der Nut und senkrecht zur flächigen Erstreckung der Plattenform des jeweiligen Hakenelementabschnitts verläuft. Bevorzugt ist die Rotationsachse festgelegt durch einen Bolzen, der an dem jeweiligen Führungsabschnitt vorgesehen ist. Besonders bevorzugt stehen die Führungsabschnitte über das Modulgehäuse des anderen Moduls, an dem sie fixiert sind, vertikal vor, wobei in der Betriebsposition die Schrauben in einem vertikalen Bereich zwischen den Modulgehäusen der beiden über die Hakeneinrichtung aneinander fixierten Module angeordnet sind. Indem die Führungsabschnitte über das Modulgehäuse des anderen Moduls vertikal vorstehen, können die Führungsabschnitte mit dem von ihnen ausgebildeten Auflageabschnitt der Hakeneinrichtung auf den Modulflansch des einen Moduls aufgelegt werden, während die Schrauben zur Betätigung der Hakenelemente auf einfache Weise von außen zugänglich sind, so dass eine einfache und robuste Fixierung der beiden über die Hakeneinrichtung aneinander fixierten Module ermöglicht ist. Ebenso ist hierdurch das Lösen der beiden Module ausgehend von der Betriebsposition vereinfacht ermöglicht. Allgemein ist bevorzugt ausschließlich das oberste Modul der Leuchtenstele über eine solche Hakeneinrichtung an dem zweitobersten Modul der Leuchtenstele befestigt.

In einer Ausführungsform weist die Leuchtenstele ein Kaschierungselement auf, das nach Art eines Rohres ausgebildet ist und in einer bestimmten Betriebsposition zwischen den Modulgehäusen der Module verläuft unter Umschließung eines Zwischenraums zwischen den Modulgehäusen. In der bestimmten Betriebsposition sind die Module zueinander fixiert wie zu der zuvor beschriebenen Betriebsposition erläutert, wobei in der bestimmten Betriebsposition zusätzlich zu der Betriebsposition das Kaschierungselement wie beschrieben angeordnet ist. Besonders bevorzugt sind in der bestimmten Betriebsposition ein zwischen den Modulen vorgesehenes Verbindungselement oder eine zwischen den Modulen vorgesehene Hakeneinrichtung horizontal innerhalb des als Rohr ausgebildeten Kaschierungselement angeordnet. Das Kaschierungselement bildet bevorzugt eine umfänglich um die Vertikale umlaufende Außenseite der Leuchtenstele entlang der vertikalen Erstreckung der Leuchtenstele zwischen den beiden Modulgehäusen. Durch das Kaschierungselement kann eine gezielte optische Ausgestaltung der Leuchtenstele im Übergangsbereich zwischen den Modulen ermöglicht sein. Besonders bevorzugt erstreckt sich das Kaschierungselement horizontal ausschließlich innerhalb der horizontalen Erstreckung der von den Modulgehäusen umschlossenen Innenräume. In einer Ausführungsform steht das Kaschierungselement nicht über die Modulgehäuse der beiden Module horizontal vor. Entsprechend kann einer Verschmutzung und/oder Beschädigung des Kaschierungselements vorgebeugt sein. Besonders bevorzugt sind umfänglich um die Vertikale umlaufende Dichtabschnitte vorgesehen, über die das Kaschierungselement in der bestimmten Betriebsposition sowohl gegen das Modulgehäuse des oberen Moduls als auch gegen das Modulgehäuse des unteren Moduls abgedichtet ist zum gewährleisten eines Zwischenraums. Die Dichtabschnitte können in den Modulgehäusen und/oder in dem Kaschierungselement integriert sein und sind zumindest in der bestimmten Betriebsposition an dem Kaschierungselement angeordnet. Die Dichtungsabschnitte können vertikal voneinander beabstandet sein.

In einer Ausführungsform umfasst das Kaschierungselement mehrere, insbesondere zwei, Schalenelemente, die miteinander lösbar verbindbar sind, wobei sie in der bestimmten Betriebsposition miteinander verbunden sind. Insbesondere können die Schalenelemente über Rastmittel, beispielsweise Federrastmittel, miteinander verbindbar sein. Jedes der Schalenelemente bildet jeweils einen Winkelabschnitt des Kaschierungselements um die Vertikale aus. Durch das Vorsehen von mehreren Schalenelementen zur Ausbildung des Kaschierungselements, die lösbar miteinander verbindbar sind und in der bestimmten Betriebsposition miteinander verbunden sind, kann das Kaschierungselement auf einfache Weise zur Realisierung der Leuchtenstele in der Betriebsposition realisiert werden und ausgehend von der bestimmten Betriebsposition von den Modulen gelöst werden, um die Betriebsposition herzustellen und den Zwischenraum zugänglich zu machen und somit ein Lösen der Module voneinander zu ermöglichen. In einer Ausführungsform ist das Kaschierungselement einstückig nach Art eines Rohres ausgebildet und vertikal verschieblich zu den Modulen geführt gelagert. Hierzu kann beispielsweise eines der Modulgehäuse, insbesondere das obere Modulgehäuse, eine Aufnahmenut aufweisen, die sich entlang der Vertikalen erstreckt, so dass das Kaschierungselement entlang der Vertikalen in diese Aufnahmenut hineingeschoben werden kann, damit der Zwischenraum zugänglich ist. In einer Ausführungsform sind an zumindest einem der Modulgehäuse und/oder dem Verbindungselement oder der Hakeneinrichtung Schraubführungsabschnitte vorgesehen, so dass durch ein Verdrehen des Kaschierungselements um die Vertikale eine Verschiebung des Kaschierungselements entlang der Vertikalen bewirkt wird. Dies kann ein besonders einfaches und kontrolliertes Verschieben des Verschiebungselements zum Freigeben des Zwischenraums ermöglichen und darüber hinaus ein zuverlässiges Verdecken des Zwischenraums in der Betriebsposition.

In einer besonders bevorzugten Ausführungsform weist die Leuchtenstele eine LED-Hinterleuchtungseinheit und/oder eine Funkeinheit auf, die innerhalb der vertikalen Erstreckung des Kaschierungselements und innerhalb der horizontalen Erstreckung des Kaschierungselements angeordnet ist bzw. sind. Allgemein ist bevorzugt das Kaschierungselement aus einem Kunststoff hergestellt, insbesondere mittels Spritzguss. Insbesondere können die Dichtungsabschnitte an dem aus Kunststoff hergestellten Kaschierungselement integral vorgesehen sein, beispielsweise mittels 2K-Verfahren. Bei der besonders vorteilhaften Ausführungsform wird die Tatsache zu Nutze gemacht, dass das Kaschierungselement einen Zwischenraum zwischen den Modulen umschließt, der zur Aufnahme von weiteren Funktionselementen, wie beispielsweise einer LED-Hinterleuchtungseinheit und/oder einer Funkeinheit geeignet ist, wobei diese Funktionselemente dann dank des Kaschierungselements sowohl optisch als auch mechanisch geschützt sind. Entsprechend kann durch die Anordnung der Funktionselemente in dem von dem Kaschierungselement eingeschlossene Zwischenraum eine weitere Funktionalität der Leuchtenstele bereitgestellt werden und eine gezielt gewünschte Erscheinung der Leuchtenstele.

Die Erfindung betrifft ferner ein Set gemäß Anspruch 13 zur Realisierung einer modularen Leuchtenstele. Das Set weist zumindest zwei Module auf, die jeweils ein Modulgehäuse aufweisen, das nach Art eines sich mit seiner Rohrachse entlang einer Vertikalen erstreckenden Rohres ausgebildet ist und einen Innenraum des jeweiligen Moduls umschließt, wobei zumindest eines der Module als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen, wobei eines der Module einen Modulflansch an der zum Innenraum gewandten Seite seiner Rohrwandung aufweist. Das Set weist ferner ein spulenförmiges Verbindungselement mit einem oberen Flansch, einem unteren Flansch und einem Verbindungsabschnitt auf. Der obere Flansch ist von dem unteren Flansch vertikal beabstandet. Der Verbindungsabschnitt verbindet die beiden Flansche. Die beiden Flansche erstrecken sich jeweils mit einem horizontalen Flanschabschnitt horizontal über den Verbindungsabschnitt hinaus. Die Module und das Verbindungselement sind dergestalt zueinander korrespondierend ausgebildet, dass sie in einer Betriebsposition anordenbar sind, in der sie zueinander positionsfest fixiert sind, wobei in der Betriebsposition der obere Flansch an einer zum Innenraum gewandten Seite der Rohrwandung des oberen Moduls angeordnet und an dieser Rohrwandung fixiert ist und der untere Flansch an einer zum Innenraum gewandten Seite der Rohrwandung des unteren Moduls angeordnet und an dieser Rohrwandung fixiert ist, wobei die Modulgehäuse der beiden Module vertikal voneinander beabstandet sind und sich der Verbindungsabschnitt zwischen den Modulgehäusen der beiden Module erstreckt. Zur Realisierung einer erfindungsgemäßen Leuchtenstele werden die Module und das Verbindungselement in der Betriebsposition angeordnet und aneinander fixiert, wobei einer der Flansche des Verbindungselements in der Betriebsposition an dem Modulflansch anliegt und über Befestigungsmittel positionsfest an diesem fixiert ist, wobei dieser Flansch des Verbindungselements und/oder der Modulflansch als Langlochflansch ausgebildet ist, der Langlöcher aufweist, die sich über einen Winkelbereich um die Vertikale erstrecken und über einen Winkelabstand voneinander beabstandet sind.

Die Erfindung betrifft ferner ein Verfahren gemäß Anspruch 14 zur Realisierung einer Leuchtenstele, die zumindest zwei Module umfasst, die jeweils ein Modulgehäuse aufweisen, das nach Art eines sich mit seiner Rohrachse entlang einer Vertikalen erstreckenden Rohres ausgebildet ist, dessen Rohrwandung einen Innenraum des jeweiligen Moduls horizontal umschließt, wobei zumindest eines der Module als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen. Zur Realisierung der Leuchtenstele werden die Module entlang der Vertikalen übereinander angeordnet und mittels eines spulenförmigen Verbindungselements aneinander fixiert, das einen oberen Flansch, einen von dem oberen Flansch vertikal beabstandeten unteren Flansch und einen die Flansche miteinander verbindenden Verbindungsabschnitt aufweist, wobei sich beide Flansche jeweils mit einem horizontalen Flanschabschnitt horizontal über den Verbindungsabschnitt hinaus erstrecken, wobei eines der Module einen Modulflansch an der zum Innenraum gewandten Seite seiner Rohrwandung aufweist. Bei dem erfindungsgemäßen Verfahren werden auf eine solche Weise der obere Flansch an einer zum Innenraum gewandten Seite der Rohrwandung des oberen Moduls angeordnet und an der Rohrwandung fixiert und der untere Flansch an einer zum Innenraum gewandten Seite der Rohrwandung des unteren Moduls angeordnet und an der Rohrwandung fixiert, dass die Modulgehäuse der beiden Module vertikal voneinander beabstandet sind und sich der Verbindungsabschnitt zwischen den Modulgehäusen der beiden Module erstreckt, wobei hierbei einer der Flansche des Verbindungselements an dem Modulflansch angeordnet wird und über Befestigungsmittel positionsfest an diesem fixiert wird und dieser Flansch des Verbindungselements und/oder der Modulflansch als Langlochflansch ausgebildet ist, der Langlöcher aufweist, die sich über einen Winkelbereich um die Vertikale erstrecken und über einen Winkelabstand voneinander beabstandet sind. In dem Innenraum eines jeden der Module werden elektrische Funktionselemente angeordnet. Bei dem erfindungsgemäßen Verfahren kann beispielsweise zunächst einer der Flansche an der Rohrwandung von einem der beiden Module fixiert werden, wonach anschließend die Module entlang der Vertikalen aufeinander aufgesetzt werden und anschließend der andere Flansch des Verbindungselements an der Rohrwandung des anderen Moduls fixiert wird. Die elektrischen Funktionselemente können ausschließlich vor der Fixierung der Module aneinander in die Innenräume der Module eingeführt werden oder ausschließlich nach der Fixierung der Module einander oder teilweise vor und teilweise nach der Fixierung der Module aneinander.

Die Erfindung betrifft ferner ein Verfahren gemäß Anspruch 15 zur Realisierung einer Leuchtenstele, die zumindest zwei Module umfasst, die jeweils ein Modulgehäuse aufweisen, das nach Art eines sich mit seiner Rohrachse entlang einer Vertikalen erstreckenden Rohres ausgebildet ist, dessen Rohrwandung einen Innenraum des jeweiligen Moduls horizontal umschließt, wobei zumindest eines der Module als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen. Zur Realisierung der Leuchtenstele werden die Module entlang der Vertikalen übereinander angeordnet und mittels einer Hakeneinrichtung aneinander fixiert, wobei eines der Module einen Modulflansch an der zum Innenraum gewandten Seite seiner Rohrwandung aufweist und die Hakeneinrichtung an dem anderen Modul vorgesehen ist, wobei die Hakeneinrichtung mit einem Auflageabschnitt auf einer vertikalen Seite des Modulflanschs aufgelegt wird und mit einem Hakenabschnitt den Modulflansch hintergreifend angeordnet wird unter Ausübung einer vertikalen Presskraft auf die gegenüberliegende vertikale Seite des Modulflanschs zur Fixierung der Module aneinander mittels der Hakeneinrichtung. Die elektrischen Funktionselemente können ausschließlich vor der Fixierung der Module aneinander in die Innenräume der Module eingeführt werden oder ausschließlich nach der Fixierung der Module einander oder teilweise vor und teilweise nach der Fixierung der Module aneinander.

Die Erfindung wird nachfolgend unter Bezugnahme auf sieben Figuren anhand von Ausführungsbeispielen erläutert.

Es zeigen:
- Figur 1:: in einer schematischen Prinzipdarstellung eine Ansicht auf eine Ausführungsform einer erfindungsgemäßen Leuchtenstele;
- Figur 2:: in einer schematischen Prinzipdarstellung eine Ansicht auf einen Ausschnitt der Ausführungsform gemäß Figur 1;
- Figur 3:: in einer schematischen Prinzipdarstellung eine Ansicht auf einen Ausschnitt von Elementen der Ausführungsform gemäß Figur 1;
- Figur 4:: in einer schematischen Prinzipdarstellung eine Ansicht auf einen Ausschnitt von Elementen der Ausführungsform gemäß Figur 1;
- Figur 5:: in einer schematischen Prinzipdarstellung eine Ansicht auf einen Ausschnitt von Elementen der Ausführungsform gemäß Figur 1;
- Figur 6:: in einer schematischen Prinzipdarstellung eine Ansicht auf einen Ausschnitt von Elementen einer weiteren Ausführungsform einer erfindungsgemäßen Leuchtenstele;
- Figur 7:: in einer schematischen Prinzipdarstellung eine Ansicht auf einen Ausschnitt von Elementen einer weiteren Ausführungsform einer erfindungsgemäßen Leuchtenstele.

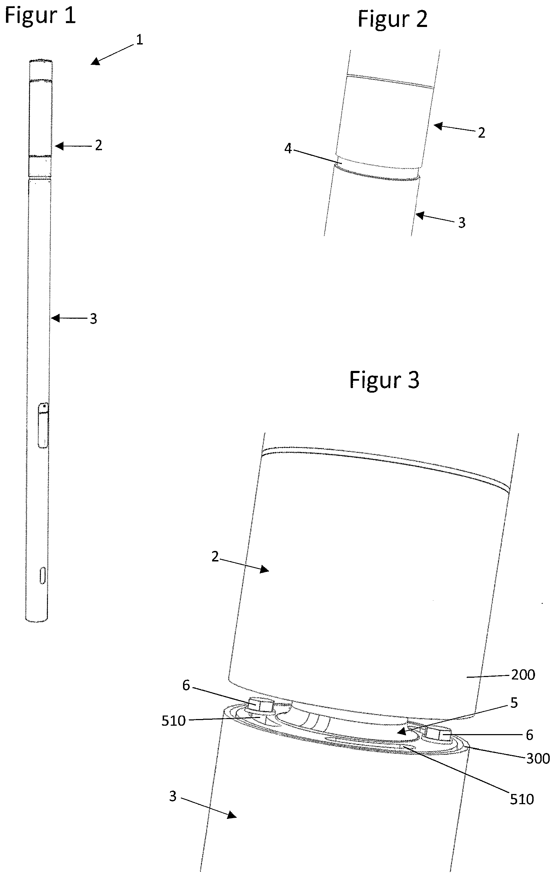

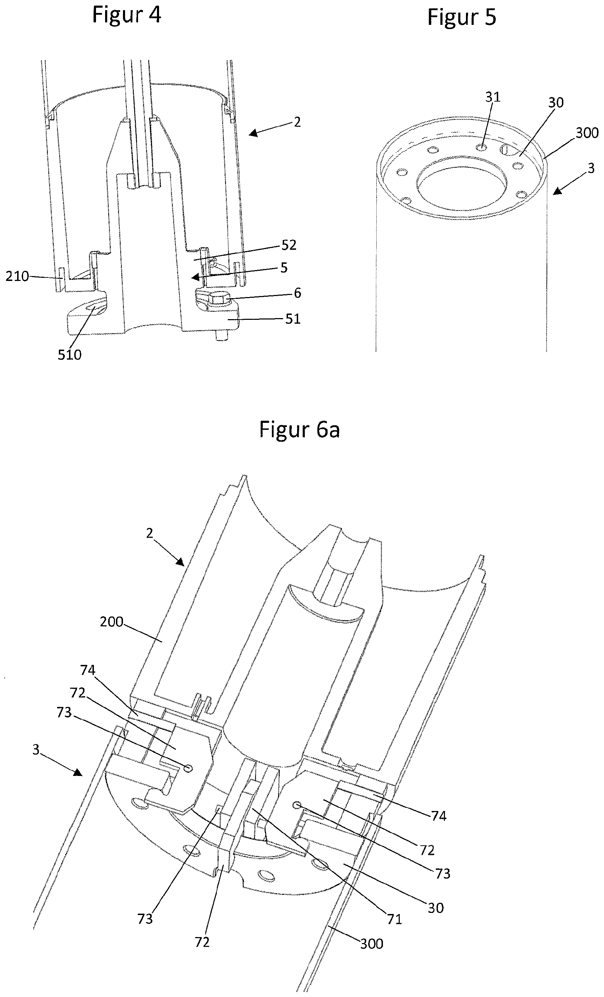

In den Figuren 1 bis 5 ist in verschiedenen schematischen Prinzipdarstellungen, die jeweils verschiedene Ansichten auf verschiedene Elemente einer Ausführungsform einer erfindungsgemäßen Leuchtenstele 1 zeigen, eine Ausführungsform einer erfindungsgemäßen Leuchtenstele 1 dargestellt. Die Leuchtenstele 1 gemäß der gezeigten Ausführungsform weist zwei Module auf, nämlich ein oberes Modul 2 und ein unteres Modul **3.** Das untere Modul 3 ist als Mastmodul ausgebildet, das auf ein nicht dargestelltes Sockelmodul aufgesetzt ist. Das obere Modul 2 ist als Leuchtkopf ausgebildet. Beide Module 2, 3 weisen jeweils ein rohrförmiges Modulgehäuse auf, wobei das Modulgehäuse des unteren Moduls 3 aus einem Hauptbestandteil besteht, der eine Revisionsöffnung aufweist, die durch einen zusätzlichen Bestandteil verschlossen ist. Das Modulgehäuse des oberen Moduls 2 ist durch mehrere, entlang der Vertikalen aneinander angeordnete und miteinander fixierte Modulgehäuseabschnitte ausgebildet, die jedoch gemeinsam ein durchgehendes Modulgehäuse ausbilden, das ein über die Vertikale hinweg durchgehend horizontal abgeschlossenen Innenraum aufweist. In den Figuren 2 und 3 ist der Übergang zwischen den Modulen 2, 3 vergrößert dargestellt. Aus Figur 2 ist zu erkennen, dass zwischen den Modulgehäusen der Module 2, 3 ein Kaschierungselement 4 vorgesehen ist, das ebenfalls nach Art eines Rohres ausgebildet ist. Bei der vorliegenden Ausführungsform ist das Kaschierungselement 4 einstückig ausgebildet und entlang der Vertikalen verschieblich angeordnet. Die Verschieblichkeit ist, wie in Figur 4 zu erkennen, dadurch gewährleistet, dass in der Rohrwandung 200 des oberen Moduls 2 an einem vertikalen Ende eine Aufnahmenut 210 vorgesehen ist, die sich entlang der Vertikalen erstreckt und umfänglich um die Vertikale umlaufend ausgebildet ist, so dass das Kaschierungselement 4 in diese Aufnahmenut 210 hineingeschoben werden kann, um den in der in Figur 1 und 2 dargestellten bestimmten Betriebsposition von dem Kaschierungselement 4 umschlossenen Zwischenraum zugänglich zu machen. In Figur 3 ist der in Figur 2 gezeigte Übergang ohne das Kaschierungselement 4 in der Betriebsposition dargestellt. Aus Figur 3 ist zu erkennen, dass bei der erfindungsgemäßen Ausführungsform einer Leuchtenstele 1 ein Verbindungselement 5 vorgesehen ist, das über als Befestigungsschrauben 6 ausgebildet Befestigungsmittel mit dem unteren Modul 3 verschraubt ist. Hierzu weist das Verbindungselement 5, wie aus der Zusammenschau der Figuren 3 und 4 zu erkennen, einen unteren Flansch 51 auf, der über einen Verbindungsabschnitt mit einem oberen Flansch 52 verbunden ist, wobei sich der untere Flansch 51 mit einem Flanschabschnitt horizontal über den Verbindungsabschnitt hinaus erstreckt und in dem Flanschabschnitt Langlöcher 510 vorgesehen sind. In der Betriebsposition sind die Befestigungsschrauben 6 durch die Langlöcher 510 gesteckt und in Gewindebohrungen 31 geschraubt, die in einem Modulflansch 30 vorgesehen sind, der in Figur 5 gezeigt ist und an der zum Innenraum gewandten Seite des Modulgehäuses des unteren Moduls 3 fixiert ist. Vorliegend ist der Modulflansch 30 an seinem horizontalen Außenumfang mit der Rohrwandung 300 des unteren Moduls 3 verschweißt. Der obere Flansch 52 des Verbindungselements 5 ist mit der Rohrwandung 200 des oberen Moduls 2 positionsfest verbunden.

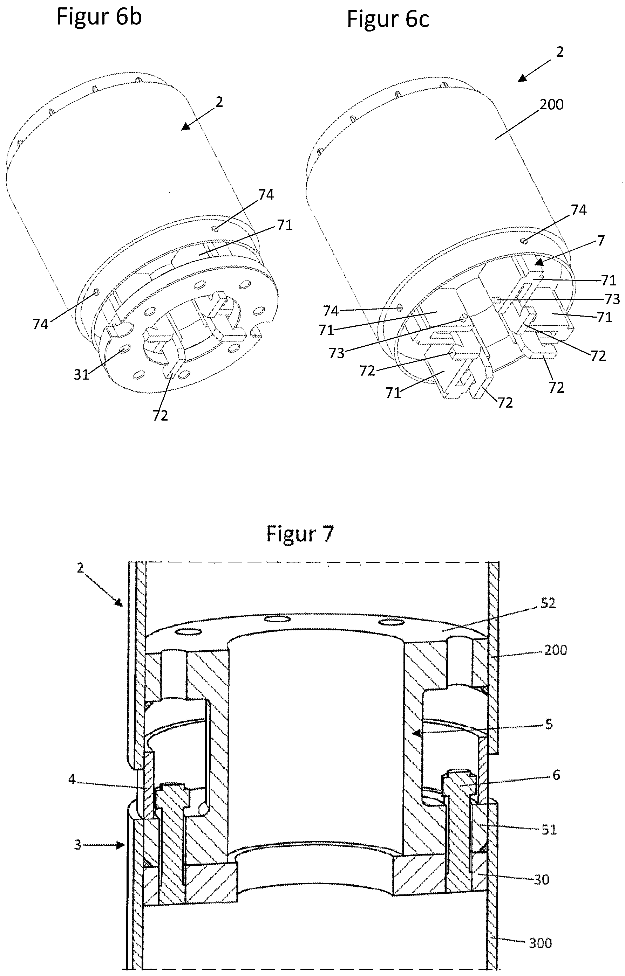

In Figur 6 umfassend die Figuren 6a, 6b und 6c ist in schematischen Prinzipdarstellungen ein Ausschnitt auf Elemente einer weiteren Ausführungsform einer erfindungsgemäßen Leuchtenstele 1 mit verschiedenen Ansichten dargestellt. Bei dem in Figur 6 gezeigten Ausführungsbeispiel ist an dem oberen Modul 2 anstelle eines Verbindungselements 5 eine Hakeneinrichtung 7 vorgesehen. Die Hakeneinrichtung 7 weist Führungsabschnitte 71 auf, die an das Modulgehäuse des oberen Moduls 2 angeschweißt sind.

Die Führungsabschnitte 71 weisen Führungsnuten auf, in denen jeweils ein Hakenelement 72 angeordnet ist. Das Hakenelement 72 erstreckt sich mit einem plattenförmigen Hakenelementabschnitt in die Führungsnut des ihm zugeordneten Führungsabschnitts 71. Senkrecht zu der plattenförmigen Erstreckung des plattenförmigen Hakenelementabschnitts erstreckt sich ein Bolzen 73 durch die Führungsnut, der mit seiner Bolzenachse eine Rotationsachse festlegt, um die das Hakenelement 72 relativ zum Führungsabschnitt 71 rotierbar ist. Die Führungsabschnitte 71 erstrecken sich, wie insbesondere aus Figur 6 zu erkennen, entlang der Vertikalen über die Rohrwandung 200 des oberen Moduls 2 hinaus nach unten und bilden gemeinsam einen Auflageabschnitt aus, mit dem die Hakeneinrichtung 7 auf dem Modulflansch 30 des unteren Moduls 3 in der Betriebsposition aufliegt, wie insbesondere aus Figur 6a zu erkennen. Dabei hintergreifen die Hakenelemente 72 der Führungseinrichtung 7 jeweils mit einem Hakenabschnitt den Modulflansch 30 des unteren Moduls 3. Bei dem beschriebenen Ausführungsbeispiel ist ferner in jedem Führungsabschnitt 71 jeweils eine Gewindebohrung vorgesehen, in die eine Madenschraube 74 geschraubt ist, die mit ihrem Schraubenende an dem Hakenelement 72 anliegt, das dem jeweiligen Führungsabschnitt 71 zugeordnet ist. Die Madenschraube 74 übt entlang ihrer Schraubenachse einen Pressdruck gegen das Hakenelement 72 aus, die auf eine Rotation des Hakenelements 72 um den Bolzen 73 hinwirkt, wodurch das Hakenelement 72 eine vertikale Presskraft von unten gegen den Modulflansch 30 ausübt, wodurch eine entsprechende vertikale Presskraft zwischen dem Führungsabschnitt 72 und der oberen vertikalen Seite des Modulflanschs 30 erzeugt wird. Entsprechend ist hierüber eine robuste und einfache Fixierung der Module 2, 3 zueinander ermöglicht. Zum Lösen der Module 2, 3 zueinander ausgehend von der Betriebsposition werden die Madenschrauben 74 so gelöst, dass die Hakenelemente 72 so weit um die Bolzen 73 drehbar sind, dass sie den Modulflansch 30 nicht mehr hintergreifen, wodurch ein Lösen der Module 2, 3 voneinander ermöglicht ist. Bei der beschriebenen Ausführungsform weist die Rohrwandung 200 des oberen Moduls 2 Durchführungen auf, durch die die Madenschrauben 74 zugänglich sind, um ein einfaches Fixieren und Lösen der Module 2, 3 voneinander zu ermöglichen.

In Figur 7 ist in einer schematischen Prinzipdarstellung eine Ansicht auf Elemente einer weiteren Ausführungsform einer erfindungsgemäßen Leuchtenstele 1 gezeigt. Die Ausführungsform gemäß Figur 7 weist ein spulenförmiges Verbindungselement 5 mit einem oberen Flansch 52 und einem unteren Flansch 51 auf. Der untere Flansch 51 ist über Befestigungsschrauben 6 an dem Modulflansch 30 des unteren Moduls 3 fixiert. Der obere Flansch 52 ist an der Innenseite der Rohrwandung 200 des oberen Moduls 2 angeschweißt, und der Modulflansch 30 ist an der Innenseite der Rohrwandung 300 des unteren Moduls 3 angeschweißt. Bei der beschriebenen Ausführungsform ist ein Kaschierungselement 4 vorgesehen, das vorliegend als einstückiges Rohr aus lichtundurchlässigem Kunststoff ausgebildet ist. An der Innenseite des Kaschierungselements 4 ist eine spiralförmige Nut vorgesehen, die mit den Köpfen der Befestigungsschrauben 6 korrespondiert, so dass das Kaschierungselement 4 durch ein Verdrehen um die Vertikale entlang der Vertikalen bewegt werden kann. Dies ermöglicht ein einfaches positionsfestes Fixieren des Kaschierungselements 4 an den Modulen 2, 3 und ein einfaches Lösen des Kaschierungselements 4 durch Ausführung einer Drehbewegung des Kaschierungselements 4 relativ zu den Modulen 2, 3 ausgehend von der Betriebsposition.

### Bezugszeichenliste

- 1: Leuchtenstele
- 2: oberes Modul
- 3: unteres Modul
- 4: Kaschierungselement
- 5: Verbindungselement
- 6: Befestigungsschraube
- 7: Hakeneinrichtung
- 30: Modulflansch des unteren Moduls
- 31: Gewindebohrung
- 51: unterer Flansch
- 52: oberer Flansch
- 71: Führungsabschnitt
- 72: Hakenelement
- 73: Bolzen
- 74: Madenschraube
- 200: Rohrwandung des oberen Moduls
- 210: Aufnahmenut
- 300: Rohrwandung des unteren Moduls
- 510: Langloch

## Patentansprüche

1. Modulare Leuchtenstele (1) umfassend zumindest zwei Module (2, 3), die jeweils ein Modulgehäuse aufweisen, das nach Art eines sich mit seiner Rohrachse entlang einer Vertikalen erstreckenden Rohres ausgebildet ist, dessen Rohrwandung (200, 300) einen Innenraum des jeweiligen Moduls (2, 3) horizontal umschließt, wobei in dem Innenraum eines jeden der Module (2, 3) zumindest ein elektrisches Funktionselement angeordnet ist, wobei zumindest eines der Module (2, 3) als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen, wobei die Leuchtenstele (1) ein spulenförmiges Verbindungselement (5) mit einem oberen Flansch (52), einem von dem oberen Flansch (52) vertikal beabstandeten unteren Flansch (51) und einem die Flansche (51, 52) miteinander verbindenden Verbindungsabschnitt aufweist, wobei sich beide Flansche (51, 52) jeweils mit einem horizontalen Flanschabschnitt horizontal über den Verbindungsabschnitt hinaus erstrecken, wobei in einer Betriebsposition der Leuchtenstele (1) der obere Flansch (52) an einer zum Innenraum gewandten Seite der Rohrwandung (200) des oberen Moduls (2) angeordnet und an dieser Rohrwandung (200) fixiert ist und der untere Flansch (51) an einer zum Innenraum gewandten Seite der Rohrwandung (300) des unteren Moduls (3) angeordnet und an dieser Rohrwandung (300) fixiert ist, wobei die Modulgehäuse der beiden Module (2, 3) vertikal voneinander beabstandet sind und sich der Verbindungsabschnitt zwischen den Modulgehäusen der beiden Module (2, 3) erstreckt,
**dadurch gekennzeichnet, dass**
eines der Module (2, 3) einen Modulflansch (30) an der zum Innenraum gewandten Seite seiner Rohrwandung (200, 300) aufweist, wobei einer der Flansche (51, 52) des Verbindungselements (5) in der Betriebsposition an dem Modulflansch (30) anliegt und über Befestigungsmittel positionsfest an diesem fixiert ist, wobei dieser Flansch (51, 52) des Verbindungselements (5) und/oder der Modulflansch (30) als Langlochflansch ausgebildet ist, der Langlöcher (510) aufweist, die sich über einen Winkelbereich um die Vertikale erstrecken und über einen Winkelabstand voneinander beabstandet sind.

2. Leuchtenstele (1) nach Anspruch 1,
**dadurch gekennzeichnet, dass**
der Verbindungsabschnitt einen lichten Querschnitt aufweist, der mindestens ein Zehntel, insbesondere mindestens ein Fünftel, insbesondere mindestens ein Drittel der Querschnitte der beiden Module (2, 3) an ihren zueinander gewandten Enden aufweist.

3. Leuchtenstele (1) nach einem der vorangehenden Ansprüche, **dadurch gekennzeichnet, dass**
in der Betriebsposition der Leuchtenstele (1) an dem Modulflansch (30) mehrere, insbesondere zumindest drei, Befestigungsmittel fixiert sind, die sich durch jeweils eines der Langlöcher (510) des als Langlochflansch ausgebildeten Flanschs (51, 52) hindurch erstrecken und den Modulflansch (30) und den Langlochflansch gegeneinander pressen,
oder dass
in der Betriebsposition der Leuchtenstele (1) an dem einen Flansch (51, 52) mehrere, insbesondere zumindest drei, Befestigungsmittel fixiert sind, die sich durch jeweils eines der Langlöcher (510) des als Langlochflansch ausgebildeten Modulflanschs (30) hindurch erstrecken und den Modulflansch (30) und den Flansch (51, 52) gegeneinander pressen.

4. Leuchtenstele (1) nach einem der vorangehenden Ansprüche, **dadurch gekennzeichnet, dass**
in dem Modulflansch (30) Befestigungsanker für Befestigungsmittel, insbesondere Gewindelöcher für Befestigungsschrauben, vorgesehen sind, in denen in der Betriebsposition die Befestigungsmittel verankert sind, die den Langlochflansch ausgebildeten Flansch (51, 52) gegen den Modulflansch (30) pressen, wobei insbesondere mehr, insbesondere doppelt so viele, Befestigungsanker in dem Modulflansch (30) vorgesehen sind als Langlöcher (510) in dem als Langlochflansch ausgebildeten Flansch (51, 52),
oder dass
in dem einen Flansch (51, 52) Befestigungsanker für Befestigungsmittel, insbesondere Gewindelöcher für Befestigungsschrauben, vorgesehen sind, in denen in der Betriebsposition die Befestigungsmittel verankert sind, die den als Langlochflansch ausgebildeten Modulflansch (30) gegen den Flansch (30) pressen, wobei insbesondere mehr, insbesondere doppelt so viele, Befestigungsanker in dem Flansch (30) vorgesehen sind als Langlöcher (510) in dem als Langlochflansch ausgebildeten Modulflansch (30).

5. Leuchtenstele (1) nach einem der vorangehenden Ansprüche,
**dadurch gekennzeichnet, dass**
der andere der Flansche (51, 52) des Verbindungselements (5) an dem Modulgehäuse des anderen Moduls (2, 3) angeschweißt ist oder mittels anderer Befestigungsmittel an einem Modulflansch (30) des anderen Moduls (2, 3) positionsfest fixiert ist, wobei insbesondere die Befestigungsmittel horizontal versetzt zu den anderen Befestigungsmitteln angeordnet sind.

6. Leuchtenstele (1) nach einem der Ansprüche 1 bis 4,
**dadurch gekennzeichnet, dass**
die Leuchtenstele (1) eine Backenfixiereinrichtung aufweist, die mehrere Backenelemente aufweist, die um die Vertikale umlaufend verteilt angeordnet und miteinander dergestalt beweglich verbunden sind, dass sie auf Kreisbahnen mit unterschiedlichen Radien um die Vertikale verteilt anordenbar sind, wobei die Backenelemente jeweils eine horizontale Durchführung zum Durchführen eines sich mit seiner Fixiermittelachse horizontal erstreckenden Fixiermittels aufweisen, wobei in der Betriebsposition der Leuchtenstele (1) die Backeneinrichtung und einer der Flansche (51, 52) des Verbindungselements (5) in dem Innenraum von einem der Module (2, 3) angeordnet sind und jeweils ein Fixiermittel mit einem ersten Ende entlang seiner Fixiermittelachse gegen den Verbindungsabschnitt presst und entlang seiner Erstreckung entlang seiner Fixiermittelachse von seinem ersten Ende beabstandet in der Durchführung von einem der Backenelemente mit einem Formschluss gehalten ist unter Ausbildung einer Presskraft zwischen dem Verbindungsabschnitt und dem jeweiligen Backenelement, wobei das jeweilige Backenelement mit seiner von dem Verbindungsabschnitt entlang der Fixiermittelachse des Fixiermittels weg weisenden Seite von innen gegen das Modulgehäuse des genannten Moduls (2, 3) presst, so dass dieses Modulgehäuse mittels der Backenfixiereinrichtung in der Betriebsposition gegen den Verbindungsabschnitt gepresst und an diesem gehalten ist.

7. Modulare Leuchtenstele (1) umfassend zumindest zwei Module (2, 3), die jeweils ein Modulgehäuse aufweisen, das nach Art eines sich mit seiner Rohrachse entlang einer Vertikalen erstreckenden Rohres ausgebildet ist, dessen Rohrwandung (200, 300) einen Innenraum des jeweiligen Moduls (2, 3) horizontal umschließt, wobei in dem Innenraum eines jeden der Module (2, 3) zumindest ein elektrisches Funktionselement angeordnet ist, wobei zumindest eines der Module (2, 3) als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen,
**dadurch gekennzeichnet, dass**
eines der Module (2, 3) einen Modulflansch (30) an der zum Innenraum gewandten Seite seiner Rohrwandung (200, 300) aufweist und an dem anderen Modul (2, 3) eine Hakeneinrichtung (7) vorgesehen ist, wobei die Hakeneinrichtung (7) in einer Betriebsposition der Leuchtenstele (1) mit einem Auflageabschnitt auf einer vertikalen Seite des Modulflanschs (30) aufliegt und mit einem Hakenabschnitt den Modulflansch (30) hintergreift unter Ausübung einer vertikalen Presskraft auf die gegenüberliegende vertikale Seite des Modulflanschs (30).

8. Leuchtenstele (1) nach Anspruch 7,
**dadurch gekennzeichnet, dass**
die Hakeneinrichtung (7) Führungsabschnitte (71) aufweist, die an dem Modulgehäuse der anderen der Module (2, 3) fixiert, insbesondere angeschweißt, sind und in denen Hakenelemente (72) um eine horizontale Rotationsachse verschwenkbar geführt sind, wobei in den Führungsabschnitten (71) Schrauben vorgesehen sind, deren Gewinde sich um eine horizontale Schraubenachse herum windet, wobei jede der Schrauben mit einem ihrer Schraubenenden vertikal zur Rotationsachse versetzt an einem der Hakenelemente (72) anliegt, wobei das Schraubenende mit dem jeweiligen Hakenelement (72) gekoppelt ist und eine Veränderung der Position des Schraubenendes entlang der Schraubenachse eine Rotation des Hakenelements (72) um die Rotationsachse bewirkt, wobei insbesondere die Führungsabschnitte (71) über das Modulgehäuse vertikal vorstehen und in der Betriebsposition die Schrauben in einem vertikalen Bereich zwischen den Modulgehäusen der beiden über die Hakeneinrichtung (7) aneinander fixierten Module (2, 3) angeordnet sind.

9. Leuchtenstele (1) nach einem der vorangehenden Ansprüche,
**dadurch gekennzeichnet, dass**
die Leuchtenstele (1) ein Kaschierungselement (4) umfasst, das nach Art eines Rohres ausgebildet ist und in einer bestimmten Betriebsposition zwischen den Modulgehäusen der Module (2, 3) verläuft unter Umschließung eines Zwischenraums zwischen den Modulgehäusen.

10. Leuchtenstele (1) nach Anspruch 9,
**dadurch gekennzeichnet, dass**
das Kaschierungselement (4) sich horizontal ausschließlich innerhalb einer horizontalen Erstreckung der von den Modulgehäusen umschlossenen Innenräume erstreckt.

11. Leuchtenstele (1) nach einem der Ansprüche 9 oder 10,
**dadurch gekennzeichnet, dass**
das Kaschierungselement (4) mehrere, insbesondere zwei, Schalenelemente umfasst, die insbesondere über Rastmittel, miteinander lösbar verbindbar sind und die jeweils einen Winkelabschnitt des Kaschierungselements (4) um die Vertikale ausbilden, oder dass das Kaschierungselement (4) einstückig ausgebildet ist und vertikal verschieblich zu den Modulen (2, 3) geführt gelagert ist.

12. Leuchtenstele (1) nach einem der Ansprüche 9 bis 11,
**dadurch gekennzeichnet, dass**
die Leuchtenstele (1) eine LED-Hinterleuchtungseinheit und/oder eine Funkeinheit aufweist, die innerhalb der vertikalen Erstreckung und horizontal innerhalb des Kaschierungselements (4) angeordnet ist.

13. Set zur Realisierung einer modularen Leuchtenstele (1) nach einem der Ansprüche 1 bis 6 und insbesondere einem der Ansprüche 9 bis 11, wobei das Set zumindest zwei Module (2, 3) umfasst, die jeweils ein Modulgehäuse aufweisen, das nach Art eines sich mit seiner Rohrachse entlang einer Vertikalen erstreckenden Rohres ausgebildet ist und einen Innenraum des jeweiligen Moduls (2, 3) umschließt, wobei zumindest eines der Module (2, 3) als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen,
**dadurch gekennzeichnet, dass**
eines der Module (2, 3) einen Modulflansch (30) an der zum Innenraum gewandten Seite seiner Rohrwandung (200, 300) aufweist, wobei das Set ein spulenförmiges Verbindungselement (5) mit einem oberen Flansch (52), einem von dem oberen Flansch (52) vertikal beabstandeten unteren Flansch (51) und einem die Flansche (51, 52) miteinander verbindenden Verbindungsabschnitt aufweist, wobei sich beide Flansche (51, 52) jeweils mit einem horizontalen Flanschabschnitt horizontal über den Verbindungsabschnitt hinaus erstrecken, wobei die Module (2, 3) und das Verbindungselement (5) dergestalt zueinander korrespondierend ausgebildet sind, dass sie in einer Betriebsposition anordenbar und zueinander positionsfest fixierbar sind, wobei in der Betriebsposition der obere Flansch (52) an einer zum Innenraum gewandten Seite der Rohrwandung (200) des oberen Moduls (2) angeordnet und an dieser Rohrwandung (200) fixiert ist und der untere Flansch (51) an einer zum Innenraum gewandten Seite der Rohrwandung (300) des unteren Moduls (3) angeordnet und an dieser Rohrwandung (300) fixiert ist, wobei die Modulgehäuse der beiden Module (2, 3) vertikal voneinander beabstandet sind und sich der Verbindungsabschnitt zwischen den Modulgehäusen der beiden Module (2, 3) erstreckt, wobei einer der Flansche (51, 52) des Verbindungselements (5) in der Betriebsposition an dem Modulflansch (30) anliegt und über Befestigungsmittel positionsfest an diesem fixiert ist, wobei dieser Flansch (51, 52) des Verbindungselements (5) und/oder der Modulflansch (30) als Langlochflansch ausgebildet ist, der Langlöcher (510) aufweist, die sich über einen Winkelbereich um die Vertikale erstrecken und über einen Winkelabstand voneinander beabstandet sind.

14. Verfahren zur Realisierung einer Leuchtenstele (1) umfassend zumindest zwei Module (2, 3), die jeweils ein Modulgehäuse aufweisen, das nach Art eines sich mit seiner Rohrachse entlang einer Vertikalen erstreckenden Rohres ausgebildet ist, dessen Rohrwandung einen Innenraum des jeweiligen Moduls (2, 3) horizontal umschließt, wobei zumindest eines der Module (2, 3) als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen,
**dadurch gekennzeichnet, dass**
die Module (2, 3) entlang der Vertikalen übereinander angeordnet werden und mittels eines spulenförmigen Verbindungselements (5) aneinander fixiert werden, das einen oberen Flansch (52), einen von dem oberen Flansch (52) vertikal beabstandeten unteren Flansch (51) und einen die Flansche (51, 52) miteinander verbindenden Verbindungsabschnitt aufweist, wobei sich beide Flansche (51, 52) jeweils mit einem horizontalen Flanschabschnitt horizontal über den Verbindungsabschnitt hinaus erstrecken, wobei eines der Module (2, 3) einen Modulflansch (30) an der zum Innenraum gewandten Seite seiner Rohrwandung (200, 300) aufweist, wobei dergestalt der obere Flansch (52) an einer zum Innenraum gewandten Seite der Rohrwandung (200) des oberen Moduls (2) angeordnet und an dieser Rohrwandung (200) fixiert wird und der untere Flansch (3) an einer zum Innenraum gewandten Seite der Rohrwandung (300) des unteren Moduls (3) angeordnet und an dieser Rohrwandung (300) fixiert wird, dass die Modulgehäuse der beiden Module (2, 3) vertikal voneinander beabstandet sind und sich der Verbindungsabschnitt zwischen den Modulgehäusen der beiden Module (2, 3) erstreckt, wobei hierbei einer der Flansche (51, 52) des Verbindungselements (5) an dem Modulflansch (30) angeordnet wird und über Befestigungsmittel positionsfest an diesem fixiert wird und dieser Flansch (51, 52) des Verbindungselements (5) und/oder der Modulflansch (30) als Langlochflansch ausgebildet ist, der Langlöcher (510) aufweist, die sich über einen Winkelbereich um die Vertikale erstrecken und über einen Winkelabstand voneinander beabstandet sind, wobei in dem Innenraum eines jedes der Module (2, 3) elektrische Funktionselemente angeordnet werden.

15. Verfahren zur Realisierung einer Leuchtenstele (1) umfassend zumindest zwei Module (2, 3), die jeweils ein Modulgehäuse aufweisen, das nach Art eines sich mit seiner Rohrachse entlang einer Vertikalen erstreckenden Rohres ausgebildet ist, dessen Rohrwandung einen Innenraum des jeweiligen Moduls (2, 3) horizontal umschließt, wobei zumindest eines der Module (2, 3) als Leuchtmodul ausgebildet ist, das eine Lichtaustrittsöffnung aufweist und in dessen Modulgehäuse eine Lichtquelle angeordnet ist, die dazu ausgebildet ist, durch die Lichtaustrittsöffnung Licht abzustrahlen,
**dadurch gekennzeichnet, dass**
die Module (2, 3) entlang der Vertikalen übereinander angeordnet werden und mittels einer Hakeneinrichtung (7) aneinander fixiert werden, , wobei eines der Module (2, 3) einen Modulflansch (30) an der zum Innenraum gewandten Seite seiner Rohrwandung (200, 300) aufweist und die Hakeneinrichtung (7)an dem anderen Modul (2, 3) vorgesehen ist, wobei die Hakeneinrichtung (7) mit einem Auflageabschnitt auf einer vertikalen Seite des Modulflanschs (30) aufgelegt wird und mit einem Hakenabschnitt den Modulflansch (30) hintergreifend angeordnet wird unter Ausübung einer vertikalen Presskraft auf die gegenüberliegende vertikale Seite des Modulflanschs (30) zur Fixierung der Module (2, 3) aneinander mittels der Hakeneinrichtung (7).

## Claims

1. Modular pillar luminaire (1) comprising at least two modules (2, 3), each having a module housing which is designed in the form of a tube which extends along a vertical with its tube axis, the tube wall (200, 300) of which horizontally encloses an interior of the respective module (2, 3), wherein at least one electrical functional element is arranged in the interior of each of the modules (2, 3), wherein at least one of the modules (2, 3) is designed as a light module which has a light exit opening and in whose module housing a light source is arranged which is configured to emit light through the light exit opening, wherein the pillar luminaire (1) comprises a connecting section which connects a coil-shaped connecting element (5) to an upper flange (52), a lower flange (51) vertically spaced from the upper flange (52) and connects the flanges (51, 52) to each other, wherein the two flanges (51, 52) extend horizontally with a horizontal flange section beyond the connecting section, wherein in an operating position of the pillar luminaire (1), the upper flange (52) is arranged on a side of the tube wall (200) of the upper module (2) facing the interior and is fixed to that tube wall (200) and the lower flange (51) is arranged on a side of the tube wall (300) of the lower module (3) facing the interior and is fixed to that tube wall (300), wherein the module housings of the two modules (2, 3) are vertically spaced from each other and the connecting section extends between the module housings of the two modules (2, 3),
**characterized in that**
one of the modules (2, 3) has a module flange (30) on the side of its tube wall (200, 300) facing the interior, wherein one of the flanges (51, 52) of the connecting element (5) abuts the module flange (30) in the operating position and is fixed in position thereto using fasteners, wherein that flange (51, 52) of the connecting element (5) and/or the module flange (30) are designed as elongated hole flange which has elongated holes (510) that extend around the vertical by an angular distance and are spaced from each other by an angular distance.

2. Pillar luminaire (1) according to claim 1,
**characterized in that**
the connecting section has a clear cross-section which is at least one tenth, in particular at least on fifth, in particular at least one third of the cross-sections of both modules (2, 3) at their ends facing each other.

3. Pillar luminaire (1) according to any of the preceding claims,
**characterized in that**
in the operating position of the pillar luminaire (1), several, in particular at least three, fasteners are fixed which extend through a respective one of the elongated holes (510) of the flange (51, 52) designed as an elongated hole flange and press the module flange (30) and the elongated hole flange against each other,
or that
in the operating position of the pillar luminaire (1), several, in particular at least three, fasteners are fixed to one flange (51, 52) which extend through a respective one of the elongated holes (510) of the module flange (30) designed as an elongated hole flange and press the module flange (30) and the flange (51, 52) against each other.

4. Pillar luminaire (1) according to any of the preceding claims,
**characterized in that**
in the module flange (30), fastening anchors for fastening means, in particular threaded holes for fastening screws, are provided in which, in the operating position, the fasteners are anchored which press the flange (51, 52) designed as an elongated hole flange against the module flange (30), wherein in particular more, in particular twice as many fastening anchors are provided in the module flange than elongated holes (510) in the flange (51, 52) designed as an elongated hole flange
or that
in one flange (51, 52), fastening anchors for fasteners, in particular threaded holes for fastening screws, are provided in which, in the operating position, the fasteners are anchored which press the module flange (30) designed as an elongated hole flange against the flange (30), wherein in particular more, in particular twice as many fastening anchors are provided in the flange (30) than elongated holes (510) in the module flange (30) designed as an elongated hole flange.

5. Pillar luminaire (1) according to any of the preceding claims,
**characterized in that**
the other of the flanges (51, 52) of the connecting element (5) is welded to the module housing of the other module (2, 3) or is fixed in position to a module flange (30) of the other module (2, 3) using different fasteners, wherein in particular the fasteners are arranged offset from the other fasteners.

6. Pillar luminaire (1) according to any of claims 1 to 4, **characterized in that**
the pillar luminaire (1) has a jaw fixing device which comprises several jaw elements which are distributed around the vertical and are movably connected to each other in such a way that they can be arranged in circular paths with different radii around the vertical, wherein the jaw elements each have a horizontal passage for a fixing means extending horizontally with its fixing means axis to pass through, wherein in the operating position of the pillar luminaire (1), the jaw device and one of the flanges (51, 52) of the connecting element (5) are arranged in the interior of one of the modules (2, 3) and a respective fixing means presses against the connecting section with a first end along its fixing means axis and is held in the passage by one of the jaw elements with a form-fit, in a manner spaced from its first end along its extension along its fixing means axis while creating a pressing force between the connecting section and the respective jaw element, wherein the respective jaw element presses from inside against the module housing of the said module (2, 3) with its side facing away from the connecting section along the fixing means axis of the fixing means such that that module housing is pressed against and held at the connecting section by means of the jaw fixing device in the operating position.

7. Modular pillar luminaire (1) comprising at least two modules (2, 3), each having a module housing which is designed in the form of a tube which extends along a vertical with its tube axis, the tube wall (200, 300) of the tube horizontally surrounding an interior of the respective module (2, 3), wherein at least one electrical functional element is arranged in the interior of each of the modules (2, 3), wherein at least one of the modules (2, 3) is designed as a light module which has a light exit opening and in whose module housing a light source is arranged which is configured to emit light through the light exit opening,
**characterized in that**
one of the modules (2, 3) has a module flange (30) on the side of its tube wall (200, 300) facing the interior and a hook device (7) is provided on the other module (2, 3), wherein in an operating position of the pillar luminaire (1), the hook device (7) rests on a vertical side of the module flange (30) with a support section and engages behind the module flange (30) with a hook section while exerting a vertical pressing force on the opposite vertical side of the module flange (30).

8. Pillar luminaire (1) according to claim 7, **characterized in that**
the hook device (7) has guide sections (71) which are fixed,
in particular welded, to the module housing of the other modules (2, 3), and in which the hook elements (72) are pivotally guided around a horizontal axis of rotation, wherein screws are provided in the guide section (71) whose thread winds around a horizontal screw axis, wherein each of the screws abuts one of the hook elements (72) with one of its screw ends offset vertically to the axis of rotation, wherein the screw end is coupled to the respective hook element (72) and a change in position of the screw end along the screw axis causes a rotation of the hook element (72) about the axis of rotation, wherein in particular the guide sections (71) protrude vertically over the module housing and, in the operating position, the screws are arranged in a vertical region between the module housings of the two modules (2, 3) which are fixed to one another using the hook device (7).

9. Pillar luminaire (1) according to any of the preceding claims,
**characterized in that**
the pillar luminaire (1) comprises a concealing element (4) which is designed as a tube and extends between the module housings of the module (2, 3) in a specific operating position, enclosing an intermediate space between the module housings.

10. Pillar luminaire (1) according to claim 9,
**characterized in that**
the concealing element (4) extends horizontally exclusively within a horizontal extension of the interior spaces enclosed by the module housings.

11. Pillar luminaire (1) according to any of claims 9 or 10,
**characterized in that**
the concealing element (4) comprises several, in particular two, shell elements which can be releasably connected to each other in particular via latching elements and each of which constitutes an angle segment of the concealing element (4) around the vertical, or that the concealing element (4) is designed as a single piece and is mounted so that it is vertically movably guided relative to the modules (2, 3).

12. Pillar luminaire (1) according to any of claims 9 to 11,
**characterized in that**
the pillar luminaire (1) comprises an LED backlighting unit and/or functional unit that is arranged within the vertical extension and horizontally within the concealing element (4).

13. Set for creating a modular pillar luminaire (1) according to any of claims 1 to 6 and in particular according to any of claims 9 to 11, wherein the set comprises at least two modules (2, 3), each of which has a module housing which is designed in the form of a tube extending along a vertical with its tube axis and encloses an interior of the respective module (2, 3), wherein at least one of the modules (2, 3) is formed as a light module which has a light exit opening and in whose module housing a light source is arranged which is configured to emit light through the light exit opening,
**characterized in that**
one of the modules (2, 3) has a module flange (30) on the side of its tube wall (200, 300) facing the interior, wherein the set comprises a coil-shaped connecting element (5) with an upper flange (52), a lower flange (51) vertically spaced from the upper flange (52) and a connecting section connecting the flanges (51, 52) to each other, wherein both flanges (51, 52) respectively extend beyond the connecting section with a horizontal flange section, wherein the modules (2, 3) and the connecting element (5) are designed to correspond to each other in such a way that they can be arranged in an operating position and fixed in position to each other, wherein in the operating position, the upper flange (52) is arranged on a side of the tube wall (200) of the upper module (2) facing the interior and is fixed to that tube wall (200) and the lower flange (51) is arranged on a side of the tube wall (300) of the lower module (3) facing the interior and is fixed to that tube wall (300), wherein the module housings of the two modules (2, 3) are vertically spaced from each other and the connecting section extends between the module housings of the two modules (2, 3), wherein one of the flanges (51, 52) of the connecting element (5) abuts the module flange (30) in the operating position and is fixed in position thereto using fasteners, wherein that flange (51, 52) of the connecting element (5) and/or the module flange (30) is designed as an elongated hole flange which has elongated holes (510) that extend around the vertical by an angular distance and are spaced from each other by an angular distance.

14. Method for creating a pillar luminaire (1), comprising at least two modules (2, 3), each of which having a module housing which is designed in the form of a tube that extends along a vertical with its tube axis and whose tube wall horizontally encloses an interior of the respective module (2, 3), wherein at least one of the modules (2, 3) is designed as a light module which has a light exit opening and in whose module housing a light source is arranged which is configured to emit light through the light exit opening,
**characterized in that**
the modules (2, 3) are arranged one on top of the other along the vertical and are fixed to one another by means of a coil-shaped connecting element (5) which has an upper flange (52), a lower flange (51) vertically spaced from the upper flange (51) and a connecting section connecting the flanges (51, 52) to each other, wherein the two flanges (51, 52) respectively extend horizontally beyond the connecting section with a horizontal flange section, wherein one of the modules (2, 3) has a module flange (30) on a side of its tube wall (200, 300) facing the interior, wherein the upper flange (52) is arranged on the side of the tube wall (200) of the upper module (2) facing the interior and fixed to that tube wall (200) and the lower flange (3) is arranged on the side of the tube wall (300) of the lower module (3) and fixed to that tube wall (300) in such a way that the module housings of the two modules (2, 3) are vertically spaced from each other and the connecting section extends between the module housings of the two modules (2, 3), wherein in this case, one of the flanges (51, 52) of the connecting element (5) is arranged on the module flange (30) and is fixed in position thereto using fasteners and wherein that flange (51, 52) of the connecting element (5) and/or the module flange (30) are designed as an elongated hole flange which has elongated holes (510) that extend around the vertical by an angular distance and are spaced from each other by an angular distance, wherein electrical functional elements are arranged in the interior of each module (2, 3).

15. Method for creating a pillar luminaire (1) comprising at least two modules (2, 3), each of which has a module housing which is designed in the form of a tube that extends along a vertical with its tube axis and the tube wall of which horizontally encloses an interior of the respective module (2, 3), wherein at least one of the modules (2, 3) is designed as a light module which has a light exit opening and in whose module housing a light source is arranged which is configured to emit light through the light exit opening,
**characterized in that**
the modules (2, 3) are arranged one on top of the other along the vertical and are fixed to one another by means of a hook device (7), wherein one of the modules (2, 3) has a module flange (30) on the side of its tube wall (200, 300) facing the interior and the hook device (7) is provided on the other module (2, 3), wherein the hook device (7) is placed on vertical side of the module flange (30) with a support section and is arranged to engage behind the module flange (30) with a hook section while exerting a vertical pressing force on the opposite vertical side of the module flange (30), for fixing the modules (2, 3) to one another by means of the hook device (7).

## Revendications

1. Colonne lumineuse modulaire (1) comprenant au moins deux modules (2, 3), chacun ayant un boîtier de module qui est conçu sous la forme d'un tube qui s'étend le long d'une verticale avec son axe tubulaire, dont la paroi tubulaire (200, 300) entoure horizontalement un intérieur du module respectif (2, 3), dans laquelle au moins un élément fonctionnel électrique est disposé à l'intérieur de chacun des modules (2, 3), au moins l'un des modules (2, 3) étant conçu comme un module d'éclairage qui présente une ouverture de sortie de lumière et dans le boîtier duquel est disposée une source lumineuse configurée pour émettre de la lumière à travers l'ouverture de sortie de lumière, la colonne lumineuse (1) comprenant une section de raccordement qui relie un élément de raccordement en forme de spirale (5) à une bride supérieure (52), une bride inférieure (51) espacée verticalement de la bride supérieure (52) et relie les brides (51, 52) l'une à l'autre, les deux brides (51, 52) s'étendant horizontalement avec une section de bride horizontale au-delà de la section de raccordement, dans laquelle, dans une position de fonctionnement de la colonne lumineuse (1), la bride supérieure (52) est disposée sur un côté de la paroi tubulaire (200) du module supérieur (2) tourné vers l'intérieur et est fixée à cette paroi tubulaire (200) et la bride inférieure (51) est disposée sur un côté de la paroi tubulaire (300) du module inférieur (3) tourné vers l'intérieur et est fixée à cette paroi tubulaire (300), les boîtiers des deux modules (2, 3) étant espacés verticalement l'un de l'autre et la section de raccordement s'étendant entre les boîtiers des deux modules (2, 3),
**caractérisée en ce que**
l'un des modules (2, 3) comporte une bride de module (30) sur le côté de sa paroi tubulaire (200, 300) tourné vers l'intérieur, l'une des brides (51, 52) de l'élément de raccordement (5) venant en butée contre la bride de module (30) dans la position de fonctionnement et étant fixée dans cette position à l'aide d'éléments de fixation, cette bride (51, 52) de l'élément de raccordement (5) et/ou la bride de module (30) sont conçues comme des brides à trous oblongs qui présentent des trous oblongs (510) s'étendant autour de la verticale selon un angle et espacés les uns des autres selon un angle.

2. Colonne lumineuse (1) selon la revendication 1,
**caractérisée en ce que**
la section de raccordement présente une section transversale libre qui est au moins égale à un dixième, en particulier au moins égale à un cinquième, en particulier au moins égale à un tiers des sections transversales des deux modules (2, 3) au niveau de leurs extrémités se faisant face.

3. Colonne lumineuse (1) selon l'une quelconque des revendications précédentes,
**caractérisée en ce que**
dans la position de fonctionnement de la colonne lumineuse (1), plusieurs moyens de fixation, en particulier au moins trois, sont fixés, qui s'étendent à travers l'un des trous oblongs (510) de la bride (51, 52) conçue comme une bride à trous oblongs et pressent la bride du module (30) et la bride à trous oblongs l'une contre l'autre,
ou que
dans la position de fonctionnement de la colonne lumineuse (1), plusieurs moyens de fixation, en particulier au moins trois, sont fixés à une bride (51, 52), s'étendent à travers l'un des trous oblongs (510) de la bride de module (30) conçue comme une bride à trous oblongs et pressent la bride de module (30) et la bride (51, 52) l'une contre l'autre.

4. Colonne lumineuse (1) selon l'une quelconque des revendications précédentes,
**caractérisée en ce que**
dans la bride de module (30), des ancrages de fixation pour des moyens de fixation, en particulier des trous filetés pour des vis de fixation, sont prévus, dans lesquels, en position de fonctionnement, sont ancrés les moyens de fixation qui pressent la bride (51, 52) conçue comme une bride à trous oblongs contre la bride du module (30), dans laquelle en particulier plus, en particulier deux fois plus d'ancrages de fixation sont prévus dans la bride du module que de trous oblongs (510) dans la bride (51, 52) conçue comme une bride à trous oblongs
ou que
dans une bride (51, 52), des ancrages de fixation pour des moyens de fixation, en particulier des trous filetés pour des vis de fixation, sont prévus, dans lesquels, en position de fonctionnement, les moyens de fixation sont ancrés qui pressent la bride de module (30) conçue comme une bride à trous oblongs contre la bride (30), dans laquelle en particulier plus, en particulier deux fois plus d'ancrages de fixation sont prévus dans la bride (30) que de trous oblongs (510) dans la bride de module (30) conçue comme une bride à trous oblongs.

5. Colonne lumineuse (1) selon l'une quelconque des revendications précédentes,
**caractérisée en ce que**
l'autre des brides (51, 52) de l'élément de raccordement (5) est soudée au boîtier du module de l'autre module (2, 3) ou est fixée en position à une bride de module (30) de l'autre module (2, 3) à l'aide de moyens de fixation différents, les moyens de fixation étant notamment disposés de manière décalée par rapport aux autres moyens de fixation.

6. Colonne lumineuse (1) selon l'une quelconque des revendications 1 à 4,
**caractérisée en ce que**
la colonne lumineuse (1) comporte un dispositif de fixation à mâchoires qui comprend plusieurs éléments de mâchoires qui sont répartis autour de la verticale et sont reliés entre eux de manière mobile de telle sorte qu'ils peuvent être disposés en trajectoires circulaires de rayons différents autour de la verticale, les éléments de mâchoires comportant chacun un passage horizontal pour le passage d'un moyen de fixation s'étendant horizontalement avec son axe de moyen de fixation, dans laquelle, dans la position de fonctionnement de la colonne lumineuse (1), le dispositif à mâchoires et l'une des brides (51, 52) de l'élément de raccordement (5) sont disposés à l'intérieur de l'un des modules (2, 3) et un moyen de fixation respectif appuie contre la section de raccordement avec une première extrémité le long de son axe de fixation et est maintenu dans le passage par l'un des éléments de mâchoire avec un ajustement de forme, espacé de sa première extrémité le long de son extension le long de son axe de fixation, créant une force de pression entre la section de raccordement et l'élément de mâchoire respectif, dans laquelle l'élément de mâchoire respectif appuie de l'intérieur contre le boîtier du module dudit module (2, 3) avec son côté opposé à la section de raccordement le long de l'axe de fixation du moyen de fixation, de telle sorte que ce boîtier de module est pressé contre et maintenu au niveau de la section de raccordement au moyen du dispositif de fixation à mâchoires dans la position de fonctionnement.

7. Colonne lumineuse (1) comprenant au moins deux modules (2, 3), chacun ayant un boîtier de module qui est conçu sous la forme d'un tube qui s'étend le long d'une verticale avec son axe tubulaire, la paroi tubulaire (200, 300) du tube entourant horizontalement un intérieur du module respectif (2, 3), au moins un élément fonctionnel électrique étant disposé à l'intérieur de chacun des modules (2, 3), au moins l'un des modules (2, 3) étant conçu comme un module d'éclairage qui présente une ouverture de sortie de lumière et dans le boîtier de module duquel est disposée une source lumineuse qui est configurée pour émettre de la lumière à travers l'ouverture de sortie de lumière,
**caractérisée en ce que**
l'un des modules (2, 3) comporte une bride de module (30) sur le côté de sa paroi tubulaire (200, 300) tourné vers l'intérieur et un dispositif à crochet (7) est prévu sur l'autre module (2, 3), dans laquelle, dans une position de fonctionnement de la colonne lumineuse (1), le dispositif à crochet (7) repose avec une partie d'appui sur un côté vertical de la bride de module (30) et s'engage derrière la bride de module (30) avec une partie à crochet tout en exerçant une force de pression verticale sur le côté vertical opposé de la bride de module (30).

8. Colonne lumineuse (1) selon la revendication 7,
**caractérisée en ce que**
le dispositif à crochet (7) comporte des sections de guidage (71) qui sont fixées au boîtier de module des autres modules (2, 3), en particulier soudées, et dans lesquelles les éléments de crochet (72) sont guidés de manière pivotante autour d'un axe de rotation horizontal, des vis étant prévues dans la section de guidage (71) dont le filetage s'enroule autour d'un axe de vis horizontal, chacune des vis venant en butée contre l'un des éléments de crochet (72) avec l'une de ses extrémités de vis décalée verticalement par rapport à l'axe de rotation, l'extrémité de vis étant couplée à l'élément de crochet (72) respectif et un changement de position de l'extrémité de vis le long de l'axe de vis provoquant une rotation de l'élément de crochet (72) autour de l'axe de rotation, en particulier les sections de guidage (71) dépassent verticalement du boîtier du module et, en position de fonctionnement, les vis sont disposées dans une zone verticale entre les boîtiers des deux modules (2, 3) qui sont fixés l'un à l'autre à l'aide du dispositif à crochets (7).

9. Colonne lumineuse (1) selon l'une quelconque des revendications précédentes,
**caractérisée en ce que**
la colonne lumineuse (1) comprend un élément d'occultation (4) qui est conçu comme un tube et s'étend entre les boîtiers des modules (2, 3) dans une position de fonctionnement spécifique, enfermant un espace intermédiaire entre les boîtiers des modules.

10. Colonne lumineuse (1) selon la revendication 9,
**caractérisée en ce que**
l'élément d'occultation (4) s'étend horizontalement exclusivement dans le prolongement horizontal des espaces intérieurs délimités par les boîtiers de module.

11. Colonne lumineuse (1) selon l'une quelconque des revendications 9 ou 10,
**caractérisée en ce que**
l'élément d'occultation (4) comprend plusieurs éléments de coque, en particulier deux, qui peuvent être reliés entre eux de manière amovible, en particulier via des éléments de verrouillage, et dont chacun constitue un segment angulaire de l'élément d'occultation (4) autour de la verticale, ou que l'élément d'occultation (4) est conçu comme une pièce unique et est monté de manière à être guidé de manière mobile verticalement par rapport aux modules (2, 3).

12. Colonne lumineuse (1) selon l'une quelconque des revendications 9 à 11,
**caractérisée en ce que**
la colonne lumineuse (1) comprend une unité de rétroéclairage à LED et/ou une unité fonctionnelle qui est disposée dans le prolongement vertical et horizontalement dans l'élément de dissimulation (4).

13. Ensemble pour créer une colonne lumineuse modulaire (1) selon l'une quelconque des revendications 1 à 6 et en particulier selon l'une quelconque des revendications 9 à 11, dans lequel l'ensemble comprend au moins deux modules (2, 3), chacun d'entre eux comportant un boîtier de module qui est conçu sous la forme d'un tube s'étendant le long d'une verticale avec son axe tubulaire et qui renferme un intérieur du module respectif (2, 3), dans lequel au moins l'un des modules (2, 3) est formé comme un module d'éclairage qui comporte une ouverture de sortie de lumière et dans le boîtier de module duquel est disposée une source lumineuse qui est configurée pour émettre de la lumière à travers l'ouverture de sortie de lumière,
**caractérisé en ce que**
l'un des modules (2, 3) comporte une bride de module (30) sur le côté de sa paroi tubulaire (200, 300) tourné vers l'intérieur, l'ensemble comprenant un élément de raccordement en forme de spirale (5) avec une bride supérieure (52), une bride inférieure (51) espacée verticalement de la bride supérieure (52) et une section de raccordement reliant les brides (51, 52) l'une à l'autre, les deux brides (51, 52) s'étendant chacune avec une section de bride horizontale au-delà de la section de raccordement, les modules (2, 3) et l'élément de raccordement (5) sont conçus pour correspondre les uns aux autres de telle manière qu'ils peuvent être disposés dans une position de fonctionnement et fixés les uns aux autres, dans laquelle, dans la position de fonctionnement, la bride supérieure (52) est disposée sur un côté de la paroi tubulaire (200) du module supérieur (2) tourné vers l'intérieur et est fixée à cette paroi tubulaire (200) et la bride inférieure (51) est disposée sur un côté de la paroi tubulaire (300) du module inférieur (3) tourné vers l'intérieur et est fixée à cette paroi tubulaire (300), les boîtiers des deux modules (2, 3) sont espacés verticalement l'un de l'autre et la section de raccordement s'étend entre les boîtiers des deux modules (2, 3), l'une des brides (51, 52) de l'élément de raccordement (5) venant en butée contre la bride de module (30) dans la position de fonctionnement et étant fixée en position à celle-ci à l'aide d'éléments de fixation, cette bride (51, 52) de l'élément de raccordement (5) et/ou la bride de module (30) est conçue comme une bride à trous oblongs qui présente des trous oblongs (510) s'étendant autour de la verticale d'une distance angulaire et espacés les uns des autres d'une distance angulaire.

14. Procédé pour créer une colonne lumineuse (1), comprenant au moins deux modules (2, 3) qui présentent chacun un boîtier de module conçu sous la forme d'un tube s'étendant le long d'une verticale avec son axe tubulaire et dont la paroi tubulaire entoure horizontalement un intérieur du module respectif (2, 3), dans laquelle au moins l'un des modules (2, 3) est conçu comme un module d'éclairage qui présente une ouverture de sortie de lumière et dans le boîtier de module duquel est disposée une source lumineuse configurée pour émettre de la lumière à travers l'ouverture de sortie de lumière,
**caractérisé en ce que**
les modules (2, 3) sont superposés l'un à l'autre le long de la verticale et sont fixés l'un à l'autre au moyen d'un élément de raccordement en forme de spirale (5) qui comporte une bride supérieure (52), une bride inférieure (51) espacée verticalement de la bride supérieure (51) et une section de connexion reliant les brides (51, 52) l'une à l'autre, les deux brides (51, 52) s'étendant respectivement avec une section de bride horizontale horizontalement au-delà de la section de raccordement, l'un des modules (2, 3) comportant une bride de module (30) sur un côté de sa paroi tubulaire (200, 300) tourné vers l'intérieur, la bride supérieure (52) étant disposée sur le côté de la paroi tubulaire (200) du module supérieur (2) tourné vers l'intérieur et fixée à cette paroi tubulaire (200), et la bride inférieure (3) est disposée sur le côté de la paroi tubulaire (300) du module inférieur (3) et fixée à cette paroi tubulaire (300) de telle sorte que les boîtiers des deux modules (2, 3) sont espacés verticalement l'un de l'autre et la section de raccordement s'étend entre les boîtiers des deux modules (2, 3), l'une des brides (51, 52) de l'élément de raccordement (5) étant disposée sur la bride du module (30) et fixée à celle-ci à l'aide d'éléments de fixation, et cette bride (51, 52) de l'élément de raccordement (5) et/ou la bride de module (30) sont conçues comme une bride à trous oblongs qui présente des trous oblongs (510) s'étendant autour de la verticale selon un angle et espacés les uns des autres selon un angle, des éléments fonctionnels électriques étant disposés à l'intérieur de chaque module (2, 3).

15. Procédé pour créer une colonne lumineuse (1) comprenant au moins deux modules (2, 3), dont chacun comporte un boîtier de module qui est conçu sous la forme d'un tube qui s'étend le long d'une verticale avec son axe de tube et dont la paroi de tube entoure horizontalement un intérieur du module respectif (2, 3), dans lequel au moins l'un des modules (2, 3) est conçu comme un module d'éclairage qui comporte une ouverture de sortie de lumière et dans le boîtier duquel est disposée une source lumineuse configurée pour émettre de la lumière à travers l'ouverture de sortie de lumière,
**caractérisé en ce que**
les modules (2, 3) sont disposés les uns au-dessus des autres le long de la verticale et sont fixés les uns aux autres au moyen d'un dispositif à crochet (7), l'un des modules (2, 3) comportant une bride de module (30) sur le côté de sa paroi tubulaire (200, 300) tourné vers l'intérieur et le dispositif à crochet (7) étant prévu sur l'autre module (2, 3), le dispositif d'accrochage (7) étant placé avec une section de support sur le côté vertical de la bride de module (30) et étant agencé pour s'engager derrière la bride de module (30) avec une section d'accrochage tout en exerçant une force de pression verticale sur le côté vertical opposé de la bride de module (30), afin de fixer les modules (2, 3) l'un à l'autre au moyen du dispositif d'accrochage (7).
